(19) Europäisches Patentamt
European Patent Office
Office européen des brevets

(11) **EP 4 693 521 A1**

(12) **EUROPEAN PATENT APPLICATION**
published in accordance with Art. 153(4) EPC

(43) Date of publication:
**11.02.2026 Bulletin 2026/07**

(21) Application number: **24781084.9**

(22) Date of filing: **18.03.2024**

(51) International Patent Classification (IPC):
***H01M 4/66*** *(2006.01)* ***H01M 4/62*** *(2006.01)*
***H01M 4/38*** *(2006.01)* ***H01M 4/587*** *(2010.01)*
***H01M 10/0562*** *(2010.01)* ***H01M 10/052*** *(2010.01)*
***H01M 4/02*** *(2006.01)*

(52) Cooperative Patent Classification (CPC):
**H01M 4/623; H01M 4/0404; H01M 4/134; H01M 4/1395; H01M 4/364; H01M 4/366; H01M 4/382; H01M 4/583; H01M 4/62; H01M 4/622; H01M 4/626; H01M 4/628; H01M 10/052; H01M 10/0525;** H01M 2004/027;
(Cont.)

(86) International application number:
**PCT/KR2024/003362**

(87) International publication number:
**WO 2024/205093 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2023 KR 20230039338**
**23.06.2023 KR 20230080988**

(71) Applicant: **SAMSUNG SDI CO., LTD.**
**Yongin-si, Gyeonggi-do 17084 (KR)**

(72) Inventors:
- **BAE, Woo Jin**
  **Yongin-Si Gyeonggi-do 17084 (KR)**
- **LEE, Kang Hee**
  **Yongin-Si Gyeonggi-do 17084 (KR)**
- **MOON, Jong Seok**
  **Yongin-Si Gyeonggi-do 17084 (KR)**
- **WOO, Hyun Sik**
  **Yongin-Si Gyeonggi-do 17084 (KR)**
- **PARK, Jong Seok**
  **Yongin-Si Gyeonggi-do 17084 (KR)**
- **KIM, Hee Min**
  **Yongin-Si Gyeonggi-do 17084 (KR)**
- **PARK, Jin Hwan**
  **Yongin-Si Gyeonggi-do 17084 (KR)**

(74) Representative: **Michalski Hüttermann & Partner Patentanwälte mbB**
**Kaistraße 16A**
**40221 Düsseldorf (DE)**

(54) **LITHIUM METAL BATTERY AND MANUFACTURING METHOD THEREFOR**

(57) Provided are a negative electrode for a lithium metal battery, a lithium metal battery comprising same, and a method of producing the same, wherein the negative electrode comprises: a current collector; and a protective layer formed on the current collector and includes or is free of an active material layer disposed between the current collector and the protective layer, the protective layer comprising a hydroxyl group-containing first polymer, a hydrate of i) boric acid ($H_3BO_3$) or ii) boron oxide ($B_2O_3$) and water, or a combination thereof.

FIG. 1B

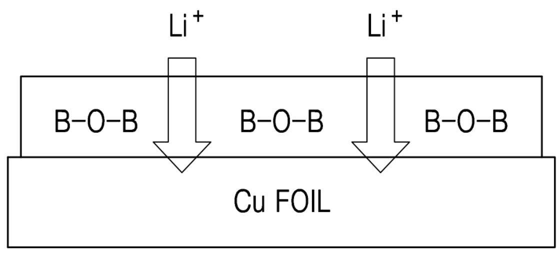

(52) Cooperative Patent Classification (CPC): (Cont.)
Y02E 60/10

## Description

### Technical Field

One or more embodiments relate to a lithium metal battery and a method of preparing the same.

### Background Art

Lithium metal batteries currently commercially available mainly use a carbon-based anode active material such as graphite. Such carbon-based anode active materials have high stability in lithium ion batteries because there is no change in volume during charging and discharging. However, since their capacity is small, anode active materials with higher capacity are required.

As an anode active material, a lithium metal with a much higher theoretical capacity than that of a carbon-based anode active material may be used.

Side reactions between a lithium metal and an electrolyte during charging and discharging give rise to formation of dendrites on a surface of the lithium metal, and the growth of dendrites cause a short circuit between a cathode and an anode, which may cause degradation in lifespan characteristics of a lithium metal battery including the lithium metal.

Thus, there is a need for a method to improve the lifespan characteristics of a lithium metal battery including the lithium metal.

### Disclosure of Invention

### Technical Problem

One or more embodiments include an anode for a lithium metal battery having a new structure.

One or more embodiments include a lithium metal battery including the anode having a new structure.

One or more embodiments include a method of preparing the anode for a lithium metal battery having a new structure.

### Solution to Problem

According to one or more embodiments, an anode for a lithium metal battery includes

an anode current collector, and
a protective layer formed on the anode current collector,
wherein the anode may further include an anode active material layer between the anode current collector and the protective layer, or may be free of an anode active material layer,
wherein the protective layer may include a first polymer including a hydroxy group, and
i) boric acid ($H_3BO_3$), ii) a hydrate of boron oxide ($B_2O_3$) and water, or a combination thereof.

According to one or more embodiments, a lithium metal battery includes a cathode,

the anode, and
an electrolyte disposed between the cathode and the anode.

The electrolyte may be a liquid electrolyte, a solid electrolyte, a gel polymer electrolyte, or a combination thereof. The solid electrolyte may include an oxide-based solid electrolyte, a sulfide-based solid electrolyte, a polymer solid electrolyte, or a combination thereof, and the gel electrolyte may include a polymer gel electrolyte.

According to one or more embodiments, a method of preparing a lithium metal battery includes preparing an anode current collector,

preparing a composition for forming a protective layer, followed by forming a protective layer by applying and drying the composition onto the anode current collector, the composition including a first polymer including a hydroxy group, and i) boric acid ($H_3BO_3$), ii) a hydrate of boron oxide ($B_2O_3$) and water, or a combination thereof;

preparing an electrolyte,
preparing a cathode, and
preparing an assembly by stacking the anode current collector, the electrolyte, and the cathode to manufacture the lithium metal battery.

## Advantageous Effects of Invention

According to the one or more embodiments, by including an anode for a lithium metal battery having a new structure, deterioration of an anode active material layer may be prevented, and accordingly a lithium metal battery having improved high-rate characteristics and lifespan characteristics may be provided.

## Brief Description of Drawings

FIG. 1A is a diagram for explaining an effect of boric acid in a protective layer of an anode for a lithium metal battery according to embodiments.
FIG. 1B is a diagram for explaining an effect of improving lithium (Li) ion transfer by B-O-B bonding in a protective layer of an anode for a lithium metal battery according to embodiments.
FIG. 2 is a diagram for explaining a laminated structure of a lithium metal battery according to embodiments.
FIG. 3 shows changes in capacity retention rates according to the number of cycles in lithium metal batteries of Example 1 and Comparative Example 1.
FIG. 4 shows changes in capacity according to the number of cycles in lithium metal batteries of Example 1 and Comparative Example 1.
FIG. 5 is a scanning electron microscope (SEM) image showing a protective layer laminated on an anode current collector in a lithium metal battery of Example 1.
FIG. 6A is an SEM image showing a state of an anode in a lithium metal battery of Example 1 after charging to state of charge (SoC) 100 %, if viewed in the diagonal direction.
FIG. 6B is a cross-sectional SEM image showing a state of an anode in a lithium metal battery of Example 1 after charging to SoC 100 %.
FIG. 6C is a cross-sectional SEM image showing a state of an anode in a lithium metal battery of Example 1 after charging to SoC 100 %.
FIG. 7 is a schematic diagram of a lithium metal battery according to embodiments.
FIG. 8 is a schematic diagram of a lithium metal battery according to other embodiments.
FIG. 9 is a schematic diagram of a lithium metal battery according to other embodiments.

## List of Reference Numerals for Major Elements

1 lithium metal battery 2, 20 anode
3, 10 cathode 4 electrolyte
5 battery case 6 cap assembly
7 battery structure 8 electrode tabs

## Best Mode for Carrying out the Invention

As the present inventive concept allows for various changes and numerous embodiments, particular exemplary embodiments will be illustrated in the drawings and described in detail. However, this is not intended to limit the present inventive concept to particular embodiments, and it should be understood to include all changes, equivalents, and substitutes included in the spirit and technical scope of the present inventive concept.

The terms used in the present description are merely used to describe particular exemplary embodiments, and are not intended to limit the present inventive concept. An expression used in the singular encompasses the expression in the plural, unless it has a clearly different meaning in the context. In the present description, it is to be understood that the terms such as "including", "having", etc., are intended to indicate the existence of the features, numbers, steps, actions, components, parts, ingredients, materials or combinations thereof disclosed in the description, and are not intended to preclude the possibility that one or more other features, numbers, steps, actions, components, parts, ingredients, materials or combinations thereof may exist or may be added. The symbol "/" used herein may be interpreted as "and" or "or" according to the context.

In the drawings, the thicknesses of layers and regions may be exaggerated or reduced for clarity. The same drawing reference numerals are given to the same parts throughout the description. In the present description, it should be noted that when a part such as a layer, a film, an area, or a plate is "on" or "above" another part, it is not only when it is "directly above" the other part, but also another part between them. In the present description, the terms "first," "second,"

etc. may be used to describe various components, but the components should not be limited by the terms. These terms may be used to distinguish one component from another. In the following description and drawings, constituent elements having] substantially the same functional constitutions are assigned like reference numerals, and overlapping descriptions will be omitted.

As used herein, the term "particle diameter" of a particle refers to an average particle diameter if the particle is spherical, and for a particle that is non-spherical, said term refers to an average major axis length of the particle. The particle diameter of the particles may be measured by using a particle size analyzer (PSA). The "particle diameter' of the particles refers to, for example, an average particle diameter. The average particle diameter may be, for example, a median particle diameter (D50). The median particle diameter D50 is a particle size corresponding to a 50 % cumulative volume calculated from particles having a small particle size in a particle size distribution measured by, for example, a laser diffraction method. The average particle diameter and average major axis length of particles may be measured using a scanning electron microscope. If the size of the particles is measured using a scanning electron microscope, the size of the particles is determined by the average value of 30 or more randomly extracted particles of 1 $\mu$m or more excluding differentials.

The term "metal" as used herein may include both a metal and a metalloid, such as silicon and germanium, in an elemental state or an ionic state.

The term "alloy" as used herein may refer to a mixture of two or more metals.

The term "cathode active material" as used herein may refer to a cathode material capable of undergoing lithiation and delithiation.

The term "anode active material" as used herein may refer to an anode material capable of undergoing lithiation and delithiation.

The terms "lithiation" and "lithiate" as used herein may refer to a process of adding lithium to a cathode active material or an anode active material.

The terms "delithiation" and "delithiate" as used herein may refer to a process of removing lithium from a cathode active material or an anode active material.

The terms "charging" and "charge" as used herein may refer to a process of providing electrochemical energy to a battery.

The terms "discharging" and "discharge" as used herein may refer to a process of eliminating electrochemical energy from a battery.

The terms "cathode" and "positive electrode" as used herein may refer to an electrode in which electrochemical reduction and lithiation occur during a discharge process.

The terms "anode" and "anode" as used herein may refer to an electrode in which electrochemical oxidation and delithiation occur during a charge process.

Hereinafter, an anode for a lithium metal battery according to embodiments, a lithium metal battery including the anode, and a method of preparing the anode will be described in more detail.

An anodeless lithium metal battery may be a battery using an anode current collector alone without an anode active material layer, wherein the battery may be operated through a process in which lithium ions transferred from a cathode are precipitated on a surface of an anode current collector upon charging, and the lithium precipitated on the surface of the anode current collector dissolves again and intercalates into the cathode upon discharging.

Such an anodeless lithium metal battery may have advantages of maximizing the energy density per volume or weight of the battery because a lithium metal used as an anode active material is omitted. However, lithium metal precipitated during operation gives rise to growth of lithium dendrites due to a non-uniform current crowding phenomenon during oxidation/reduction processes. Lithium dendrites may not only cause loss of lithium anode and reduce the capacity and lifespan of the battery, but also cause a short circuit at an anode and a cathode and give rise to safety issues.

To solve these problems, a method of introducing a protective layer on top of an anode current collector has been proposed to reduce side reactions by minimizing contact between lithium and an electrolyte solution, thereby minimizing exposure of the electrolyte solution to the electrode surface and creating a uniform flow of lithium ions throughout the electrode.

An aspect of the present disclosure provides an anode for a lithium metal battery including: an anode current collector; and a protective layer disposed on the anode current collector,

wherein the anode may further include an anode active material layer between the anode current collector and the protective layer, or may be free of an anode active material layer, the protective layer may include a first polymer including a hydroxy group, and i) boric acid ($H_3BO_3$), ii) a hydrate of boron oxide ($B_2O_3$) and water, or a combination thereof.

The anode may further include a lithium electrodeposition-inducing layer between the anode current collector and the protective layer.

The protective layer including the first polymer including a hydroxy group, and i) boric acid ($H_3BO_3$), ii) a hydrate of boron oxide ($B_2O_3$) and water, or a combination thereof is dense. Thus, as the density and strength increase, lithium ions

may move freely and lithium ion transfer may be improved, thereby improving lithium electrodeposition characteristics. As a result, ion conductivity may be increased, thereby improving high-rate characteristics of a lithium metal battery including the anode. If the protective layer is disposed on the anode active material layer, side reactions between the anode active material layer and an electrolyte may be effectively blocked and suppressed.

Referring to FIG. 1A, in formation of the protective layer, the first polymer including a hydroxy group, and an additive including i) boric acid ($H_3BO_3$), ii) a hydrate of boron oxide ($B_2O_3$) and water, or a combination thereof, may be used together so that hydrogen bonds may be formed between the first polymer and the additive.

If a general cross-linking agent is added in the formation of a protective layer, a protective layer having increased physical properties of cross-linked products may be provided, but the movement of lithium ions may be partially hindered and the ion conductivity of the protective layer may be degraded accordingly.

However, the protective layer according to embodiments may include crosslinks formed between the first polymer including a hydroxy group and a second polymer, and in this regard, the physical properties of the protective layer may be effectively improved without degrading the ion conductivity.

If the protective layer includes cross-linked polymers formed by cross-linking the first polymer including a hydroxy group and a second polymer, some of the first polymer including a hydroxy group may remain so that the hydroxy group of the first polymer may form hydrogen bonds with an additive such as boric acid. To allow some of the first polymer including a hydroxy group to remain, a mixing ratio of the first polymer including a hydroxy group to the second polymer may be adjusted. The mixing ratio of the first polymer including a hydroxy group to the second polymer may be adjusted to be in a range of about 50:50 to about 99:1, about 50:50 to about 90:10, or about 60:40 to about 90:10.

As shown in FIG. 1B, if the protective layer including boric acid is laminated on a copper foil serving as an anode current collector, the ability to transfer lithium ions may be improved.

If the protective layer according to embodiments is present on the surface of an anode active material layer including lithium metal, the formation and/or growth of lithium dendrites on the anode current collector may be effectively prevented. In this regard, the anode including the protective layer and a lithium metal battery including the anode may have improved cycle characteristics and stability.

The first polymer including a hydroxy group may include a polymerization product or a hydrolysate thereof of at least one monomer selected from: carboxymethyl cellulose (CMC), polyvinyl alcohol (PVA), vinyl acetate, butyl (meta) acrylate, 2-hydroxyethyl (meta)acrylate, 2-hydroxypropyl (meta)acrylate, 4-hydroxybutyl (meta)acrylate, 6-hydroxyhexyl (meta) acrylate, 8-hydroxyoctyl (meta)acrylate, 2-hydroxyethyleneglycol (meta)acrylate, 2-hydroxypropyleneglycol (meta)acrylate, acrylic acid, methacrylic acid, 2-(meta)acryloyloxy acetic acid, 3-(meta)acryloyloxy propyl acid, 4-(meta)acryloyloxy butyl acid, itaconic acid, maleic acid, 2-isocyanatoethyl (meta)acrylate, 3-isocyanatopropyl (meta)acrylate, 4-isocyanatobutyl (meta)acrylate, (meta)acrylamide, ethylene di(meta)acrylate, diethylene glycol(meta)acrylate, triethyleneglycol di(meta)acrylate, trimethylenepropane tri(meta)acrylate, trimethylenepropanetriacrylate, 1,3-butandiol (meta)acrylate, 1,6-hexanediol di(meta)acrylate, allyl acrylate, and N-vinylcaprolactam.

The first polymer may be PVA. For example, PVA may be a hydrolysate obtained by hydrolyzing polyvinyl acetate with alkali.

The saponification degree of PVA may be in a range of about 60 % to about 99 %, about 70 % to about 95 %, about 75 % to about 90 %, or about 80 %

to about 90 %. For example, the saponification degree of PBA may be in a range of about 85 % to about 90 %.

If the saponification degree is within the ranges above, the physical properties of the protective layer may be further improved.

The weight average molecular weight of the first polymer may be in a range of about 10,000 dalton to about 500,000 dalton, about 10,000 dalton to about 500,000 dalton, about 10,000 dalton to about 400,000 dalton, about 10,000 dalton to about 300,000 dalton, about 10,000 dalton to about 200,000 dalton, about 50,000 dalton to about 150,000 dalton, about 70,000 dalton to about 100,000 dalton, or about 80,000 dalton to about 100,000 dalton. If the weight average molecular weight of the first polymer is within the ranges above, the physical properties of the protective layer may be further improved.

The protective layer may further include the second polymer having a functional group crosslinkable with the first polymer including a hydroxy group. The protective layer may further include a cross-linked polymer of the first polymer and the second polymer.

In the protective layer, an amount of the additive, i.e., i) boric acid ($H_3BO_3$), ii) a hydrate of boron oxide ($B_2O_3$) and water, or a combination thereof, may be 5 wt% or less, or in a range of about 0.1 wt% to about 5 wt%, about 0.1 wt% to about 3 wt%, or about 0.1 wt% to about 2 wt%, based on 100 wt% of the total weight of the protective layer. If the amount of the additive is within the ranges above, the physical properties, such as elastic modulus, of the protective layer may be increased by 20 % or more. If the amount of the additive exceeds 5 wt%, the crosslinking may proceed too quickly, making it difficult to apply in practice.

The second polymer may include at least one of fluorinated polyamic acid and fluorinated polyimide, each including a carboxyl group.

The fluorinated polyamic acid may be, for example, a polymer represented by Formula 1 or 2, and the fluorinated polyimide may be, for example, a polymer represented by Formula 3 or 4:

Formula 1

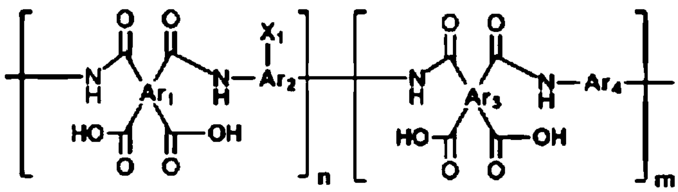

Formula 2

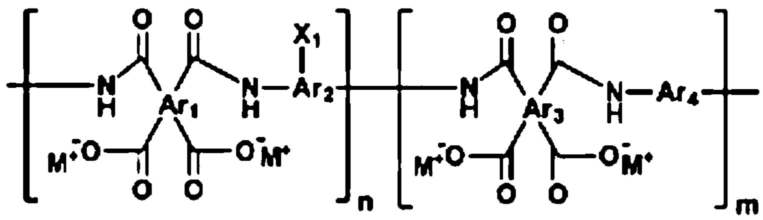

Formula 3

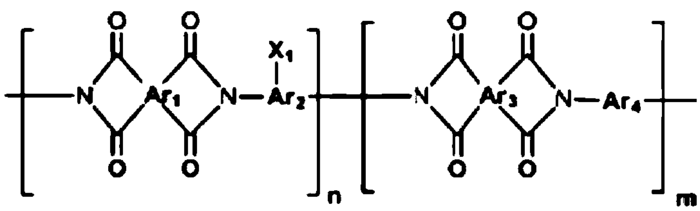

Formula 4

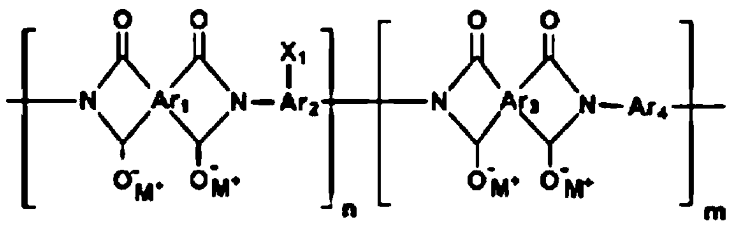

wherein, in the formulae above, M may be alkali metal,

$Ar_1$ and $Ar_3$ may each independently be an aromatic cyclic group selected from substituted or unsubstituted tetravalent C6-C24 arylene groups and substituted or unsubstituted tetravalent C4-C24 heteroarylene groups, wherein the aromatic cyclic group comprises one aromatic ring, a fused ring of two or more aromatic rings, or two or more aromatic rings linked together via a single bond, -O-, -S-, - C(=O)-, $-S(=O)_2-$, -Si(Ra)(Rb)- (wherein Ra and Rb are each independently a C1-C10 alkyl group), a substituted or unsubstituted C1-C10 alkylene group, or - C(=O)-NH-,

$Ar_2$ and $Ar_4$ may each independently be an aromatic cyclic group selected from substituted or unsubstituted divalent C6-C24 arylene groups or substituted or unsubstituted divalent C4-C24 heteroarylene groups, wherein the aromatic cyclic group comprises one aromatic ring, a fused ring of two or more aromatic rings, or two or more aromatic rings linked together via a single bond, -O-, -S-, -C(=O)-, - $S(=O)_2$-, -Si(Ra)(Rb)- (wherein Ra and Rb are each independently a C1-C10 alkyl group), a substituted or unsubstituted C1-C10 alkylene group, or -C(=O)-NH-,

at least one of $Ar_1$ to $Ar_4$ may be substituted with a halogen group,
$X_1$ may be -COOH, -OH, -CO-$NH_2$, or -COH, as a first functional group, and
n and m may each indicate a mole fraction within a repeating unit and satisfy $0<n\leq1$, $0\leq m<1$, and $n+m=1$.

The halogen group may be a fluorine group, a chlorine group, a bromine group, or an iodine group. For example, the halogen group may be a fluorine group.

$Ar_1$ and $Ar_3$ may each independently be selected from Formulae 1a and 1b, and $Ar_2$ and $Ar_4$ may each independently be selected from Formulae 1c to 1e:

Formula 1a

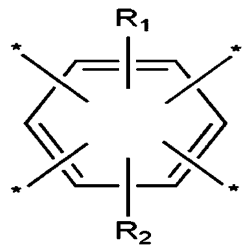

Formula 1b

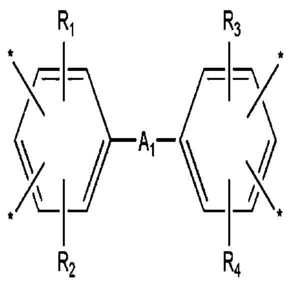

Formula 1c

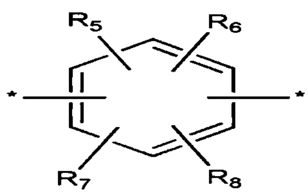

Formula 1d

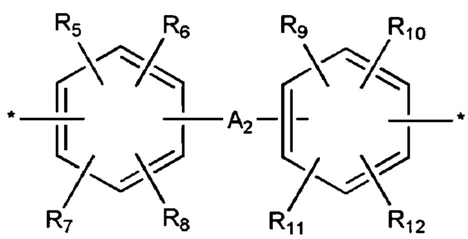

Formula 1e

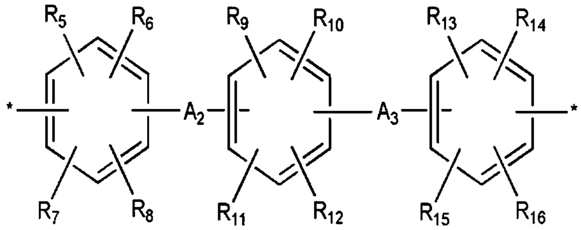

wherein, in the formulae above, $R_1$, $R_2$, $R_3$, $R_4$, $R_5$, $R_6$, $R_7$, $R_8$, $R_9$, $R_{10}$, $R_{11}$, $R_{12}$, $R_{13}$, $R_{14}$, $R_{15}$, and $R_{16}$ may each independently be hydrogen, a halogen, -COOH, -OH, $-CO-NH_2$, -COH, a C1-C10 alkyl group unsubstituted or substituted with a halogen, a C6-C20 aryl group unsubstituted or substituted with a halogen, or a C2-C20 heteroaryl group unsubstituted or substituted with a halogen, wherein at least one of $R_1$ to $R_{16}$ may be a halogen group or a group substituted with a halogen group, $A_1$, $A_2$, and $A_3$ may each independently be a single bond, -O-, - C(=O)-, -S-, $-S(=O)_2-$, -Si(Ra)(Rb)- (wherein Ra and Rb may each independently be a C1-C10 alkyl group), a C1-C10 alkylene group unsubstituted or substituted with a halogen, or -C(=O)-NH-, and at least one of $R_5$ to $R_{16}$ in Formulae 1c to 1e selected for $Ar_2$ may be, as the first functional group, -COOH, -OH, $-CO-NH_2$, or - COH.

For example, in Formulae 1a to 1e, $R_1$ to $R_{16}$ may each independently be a hydrogen atom, a halogen atom, a hydroxy group, $-CH_3$, or $-CF_3$, wherein, in Formulae 1c to 1e selected for $Ar_2$, at least one of $R_5$ to $R_{16}$ may be, as a first functional group, -COOH, -OH, $-CO-NH_2$, or -COH, and $A_2$ and $A_3$ may each independently be a single bond, -O-, -CO-, -S-, $-SO_2-$, $-C(CH_3)_2-$, -CONH-, - $C(CF_3)_2-$, $-CH_2-$, or $-CF_2-$.

The fluorinated polyamic acid may be, for example, a polymer represented by Formula 5 or 6, and the fluorinated polyimide may be, for example, a polymer represented by Formula 7 or 8:

Formula 5

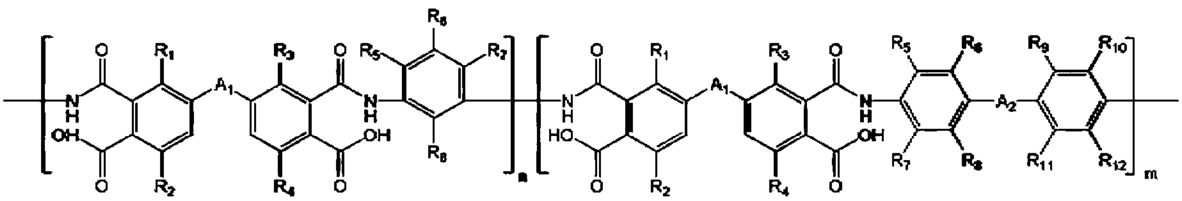

Formula 6

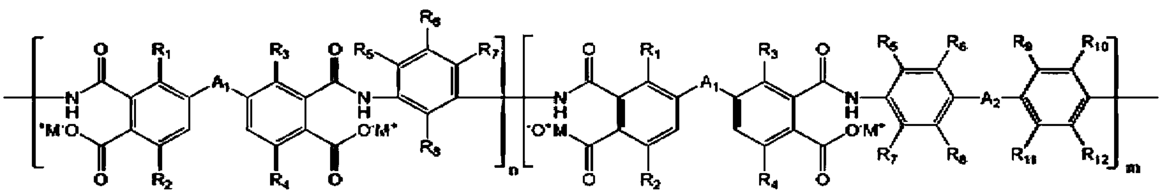

Formula 7

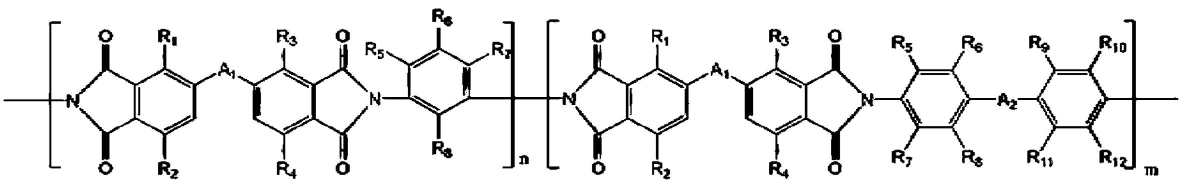

Formula 8

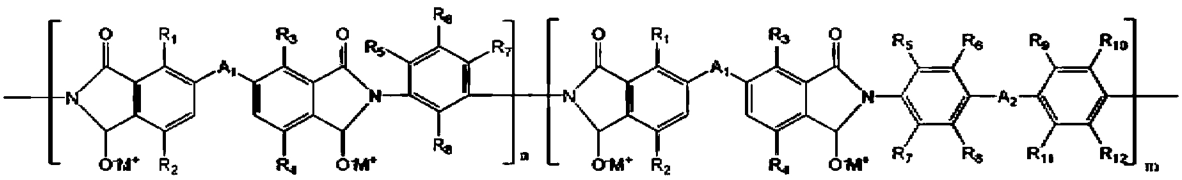

wherein, in the formulae above, M may be lithium or sodium,

$R_1$, $R_2$, $R_3$, $R_4$, $R_5$, $R_6$, $R_7$, $R_8$, $R_9$, $R_{10}$, $R_{11}$, and $R_{12}$ may each independently be hydrogen, a halogen, -COOH, -OH, -CO-$NH_2$, -COH, a C1-C10 alkyl group unsubstituted or substituted with a halogen, a C6-C20 aryl group unsubstituted or substituted with a halogen, or a C2-C20 heteroaryl group unsubstituted or substituted with a halogen, wherein at least one of $R_1$ to $R_{12}$ may be a halogen group or a group substituted with a halogen group,

$A_1$ and $A_2$ may each independently be a single bond, -O-, -S-, -C(=O)-, -S(=O)$_2$-, -Si(Ra)(Rb)- (wherein Ra and Rb may each independently be a C1-C10 alkyl group), a C1-C10 alkylene group unsubstituted or substituted with a halogen group, or -C(=O)-NH-,

wherein at least one of $R_5$, $R_6$, $R_7$, and $R_8$ may be -COOH, -OH, -CO-$NH_2$, or - COH, and n and m may each indicate a mole fraction within a repeating unit and satisfy $0<n\leq 1$, $0\leq m<1$, and $n+m=1$.

The halogen group may be a fluorine group, a chlorine group, a bromine group, or an iodine group. For example, the halogen group may be a fluorine group. $Ar_1$ and $Ar_3$ may each independently be selected from Formulae 1a and 1b, and $Ar_2$ and $Ar_4$ may each independently be selected from Formulae 1c to 1e.

The fluorinated polyamic acid may be represented by Formula 9 or 10, and the fluorinated polyimide may be represented by Formula 11 or 12:

Formula 9

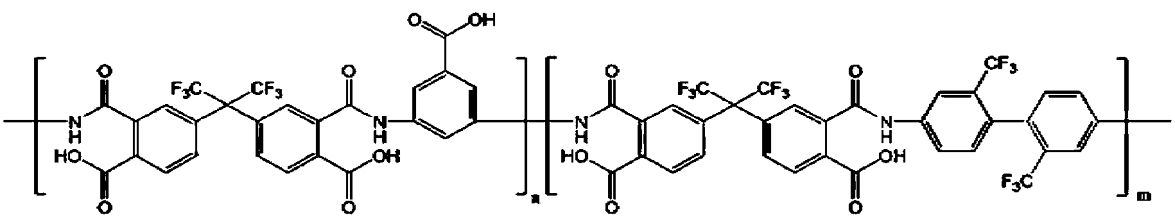

Formula 10

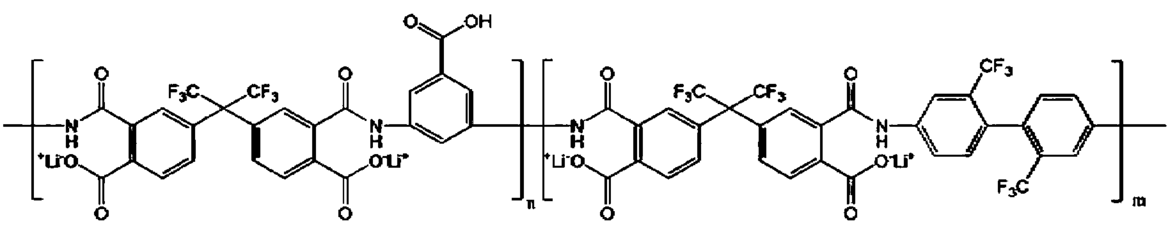

Formula 11

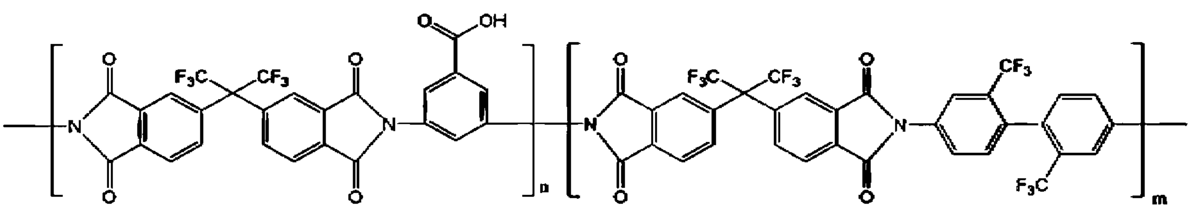

Formula 12

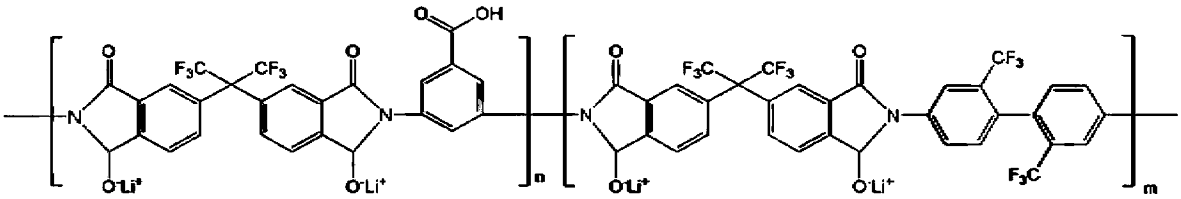

wherein, in the formulae above, n and m each indicate a mole fraction within a repeating unit and satisfy $0<n\leq1$, $0\leq m<1$, and
$n+m=1$.

For example, in the second polymer, mole fractions of a repeating unit including a cross-linking group and

a repeating unit not including a cross-linking group may each satisfy $0<n\leq0.5$, $0.5\leq m<1$, and $n+m=1$. For example, in the second polymer, mole fractions of a repeating unit including a cross-linking group and a repeating unit not including a cross-linking group may each satisfy $0.1\leq n\leq0.4$, $0.6\leq m\leq0.9$, and $n+m=1$. For example, in the second polymer, mole fractions of a repeating unit including a cross-linking group and a repeating unit not including a cross-linking group may each satisfy $0.15\leq n\leq0.35$, $0.65\leq m\leq0.85$, and $n+m=1$. For example, in the second polymer, mole fractions of a repeating unit including a cross-linking group and a repeating unit not including a cross-linking group may each satisfy $0.2\leq n\leq0.3$, $0.7\leq m\leq0.8$, and $n+m=1$. If the mole fraction is within the ranges above, further improved physical properties may be provided.

For example, the second polymer may be a random copolymer. For example,
the second polymer may be a block copolymer.

The weight average molecular weight of the second polymer may be in a range of about 10,000 Dalton to about 1,200,000 Dalton, about 10,000 Dalton to about 1,100,000 Dalton, about 10,000 Dalton to about 1,000,000 Dalton, about 10,000 Dalton to about 500,000 Dalton, about 100,000 Dalton to about 500,000 Dalton, about 100,000 Dalton to about 400,000 Dalton, for example, about 100,000 Dalton to about 300,000 Dalton. If the weight average molecular weight of the first polymer is within the ranges above, the physical properties of the protective layer may be further improved.

In the protective layer, the weight ratio of the first polymer including a hydroxy group to the second polymer included in a third polymer may be in a range of about 99:1 to about 50:50, about 95:5 to about 55:45, about 95:5 to about 60:40, about 95:5 to about 65:35, or about 90:10 to about 70:30. If the weight ratio of the first polymer to the second polymer is within the ranges above, the physical properties of the protective layer may be further improved.

The hydroxy group of the first polymer and the carboxyl group of the second polymer may react with each other to form an ester bond, thereby forming a third polymer in which the first polymer and the second polymer are crosslinked. The formation of the third polymer may improve the stability of the protective layer, and a halogen group such as a fluorine functional group may improve the interfacial stability by degrading the formation of irreversible lithium inclusion.

The protective layer according to embodiments may include, as a cross-linked polymer, a cross-linked polymer of the PVA and the fluorinated polyamic acid. The fluorinated polyamic acid may be, for example, a polymer represented by Formula 9 or 10.

In some embodiments, the cross-linked polymer of the protective layer may be a cross-linked polymer (PVA/ PI-f) of the PVA and the fluorinated polyimide. The fluorinated polyimide may be a polymer represented by Formula 11 or 12.

The protective layer may further include a lithium salt. For use as the lithium salt, for example, at least one material selected from LiSCN, $LiN(CN)_2$, $LiClO_4$, $LiBF_4$, $LiAsF_6$, $LiPF_6$, $LiCF_3SO_3$, $LiC(CF_3SO_2)_3$, $LiC(FSO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, and $LiB(C_2O_4)$ may be used.

In the anode according to embodiments, the anode active material layer may include a lithium metal foil, lithium metal powder, a lithium alloy foil, lithium alloy powder, or a combination thereof, and the lithium alloy may include lithium and a first metal.

The anode active material layer may include: a carbon-based material;
a mixture of a carbon-based material and one or more selected from a first metal; a composite of a carbon-based material and one or more selected from a first metal; or a combination thereof, wherein the carbon-based material may include amorphous carbon, and the amorphous carbon may have an average particle diameter in a range of about 10 nm to about 100 nm. The carbon-based material may include carbon black, carbon nanotubes, carbon nanofibers, fullerene, activated carbon, carbon fibers, or a combination thereof.

The first metal may include indium (In), silicon (Si), gallium (Ga), tin (Sn), aluminum (Al), Titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K),

calcium (Ca), yttrium (Y), tantalum (Ta), hafnium (Hf), barium (Ba), vanadium (V), strontium (St), lanthanum (La), or a combination thereof.

A lithium metal layer may be additionally disposed between the anode current collector and one side of the protective layer. A lithium metal layer may be additionally disposed on the other side facing the one side of the protective layer.

The thickness of the protective layer may be in a range of about 1 μm to about 10 μm, about 2 μm to about 8 μm, or about 3 μm to about 5 μm.

If the thickness of the protective layer is within the ranges above, a lithium metal battery including the protective layer may have increased internal resistance, excellent energy density without decreasing energy density of the lithium metal battery, excellent high-rate characteristics, and improved lifespan characteristics.

Another aspect of the present disclosure provides a lithium metal battery including:

a cathode; the anode according to embodiments; and
an electrolyte disposed between the cathode and the anode.

The electrolyte may be a liquid electrolyte, a solid electrolyte, a gel electrolyte, or a combination thereof. The electrolyte may be, for example, an organic electrolyte solution. The organic electrolyte solution may be, for example, prepared by dissolving a lithium salt in an organic solvent.

The solid electrolyte may include an oxide-based solid electrolyte, a sulfide-based solid electrolyte, a polymer solid electrolyte, or a combination thereof. The gel electrolyte may be in a gel state without including a polymer.

The gel electrolyte may include a polymer gel electrolyte. The cathode may include a cathode current collector and a cathode active material layer, and at least one of the cathode current collector and the anode current collector may include a base film and a metal layer disposed on one side or both sides of the base film. The base film may include a polymer, and the polymer may include polyethylene terephthalate (PET), polyethylene (PE), polypropylene (PP), polybutylene terephthalate (PBT), polyimide(PI), or a combination thereof.

The metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Referring to FIG. 2, a lithium metal battery 1 may include an anode 20 including an anode current collector 21, and may be free of an anode active material layer.

A protective layer 22 may be formed between the anode current collector 21 and an electrolyte 30.

A cathode 10 may be sequentially disposed on the electrolyte 30. The cathode 10 may include a cathode active material layer 12 and a cathode current collector 11.

An anode active material layer may be additionally disposed between the anode current collector 21 and the protective layer 22. The anode active material layer may include a lithium metal or a lithium alloy.

The lithium metal may include, for example, a lithium metal foil, a lithium alloy foil, or a combination thereof. The lithium metal may be in the form of powder, and such lithium powder may include lithium metal powder, lithium alloy powder, or a combination thereof. The lithium alloy may be an alloy of lithium with another metal alloyable with lithium, and may include, for example, a lithium-silver alloy, a lithium-zinc alloy, a lithium-magnesium alloy, a lithium-tin alloy, or the like. The anode active material layer including a lithium metal foil may be, for example, a lithium metal layer. The anode active material layer including a lithium alloy foil may be, for example, a lithium alloy layer. The anode active material layer including lithium metal powder and/or lithium alloy powder may be introduced by coating the anode current collector 21 with a slurry containing lithium powder and a binder. The binder may be, for example, a fluorine-based binder such as polyvinylidene fluoride (PVDF). The anode active material layer may be free of a carbon-based anode active material. In this regard, the anode active material layer may consist of a metal-based anode active material.

The thickness of the lithium metal may be, for example, in a range of about 1 μm to about 50 μm, about 1 μm to about 30 μm, about 10 μm to about 30 μm, or about 10 μm to about 80 μm. If the thickness of the lithium metal is within the ranges above, the lifespan characteristics of the lithium metal battery including the protective layer may be further improved. The particle diameter of the lithium powder may be, for example, in a range of about 0.1 μm to about 3 μm, about 0.1 μm to about 2 μm, or about 0.1 μm to about 2 μm. If the particle diameter of the lithium powder is within the ranges above, the lifespan characteristics of the lithium metal battery including the protective layer may be further improved.

The thickness of the anode active material layer may be, for example, in a range of about 0.1 μm to about 500 μm, about 1 μm to about 500 μm, or about 10 μm to about 500 μm, but is not limited thereto. The thickness may be adjusted depending on the required type, capacity, or the like of the lithium metal battery. If the thickness of the anode active material layer is within the above ranges, the cycle characteristics of the lithium metal battery may be improved without a decrease in the energy density thereof.

The lithium metal battery according to embodiments may not include an anode active material layer between the anode current collector 21 and the protective layer 22. The anode not including an anode active material layer may be introduced into the lithium metal battery together with the cathode and the electrolyte. By charging the lithium metal battery,

the lithium metal may be plated between the anode current collector 21 and the protective layer 22, and this plated lithium metal may serve as an anode active material layer. In this regard, an anode active material layer may be a plated lithium layer.

The lithium metal battery may further include a separator.

The separator may have a pore diameter generally in a range of about 0.01 μm to about 10 μm, and a thickness generally in a range of about 5 μm to about 20 μm. For use as the separator, for example, an olefin-based polymer such as polypropylene, or a sheet or non-woven fabric made of glass fiber or polyethylene may be used. If a solid polymer electrolyte is used as the electrolyte, the solid polymer electrolyte may serve as a separator.

The olefin-based polymer among the separator may include, for example, polyethylene, polypropylene, or a multi-layer film of two or more layers thereof, and examples of the multi-layer may include a two-layer separator of polyethylene/polypropylene, a three-layer separator of polyethylene/polypropylene/polyethylene, a three-layer separator of polypropylene/polyethylene/polypropylene, or the like.

In the lithium metal battery according to embodiments, the liquid electrolyte may contain a lithium salt and an organic solvent.

The organic solvent may be, for example, an aprotic organic solvent such as N-methyl-2-pyrrolidone, propylene carbonate, ethylene carbonate, butylene carbonate, dimethyl carbonate, diethyl carbonate, gamma-butylolactone, 1,2-dimethoxy ethane, tetrahydroxy franc, 2-methyl tetrahydrofuran, dimethyl sulfoxide, 1,3-dioxolane, formamide, dimethyl formamide, acetonitrile, nitromethane, methyl formate, methyl acetate, phosphate triester, trimethoxy methane, a dioxolane derivative, sulfonale, methyl sulfonale, 1,3-dimethyl-2-imidazolidinone, a propylene carbonate derivative, a tetrahydrofuran derivative, ether, methyl propionate, ethyl propionate, or the like. Among the aforementioned examples, the carbonate-based solvent such as propylene carbonate, ethylene carbonate, butylene carbonate, dimethyl carbonate, diethyl carbonate, or the like may be used.

The lithium salt may be any lithium salt commonly used in lithium secondary batteries, and as a material easily dissolvable in the above nonaqueous solvents, may utilize at least one of materials such as LiSCN, $LiN(CN)_2$, $LiClO_4$, $LiBF_4$, $LiAsF_6$, $LiPF_6$, $LiCF_3SO_3$, $LiC(CF_3SO_2)_3$, $LiC(FSO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, and $LiB(C_2O_4)_2$ and the like.

The concentration of the lithium salt in the liquid electrolyte may be, for example, in a range of about 1 M to about 5 M, for example, about 1 M to about 2.5 M. Within the ranges above, a sufficient amount of lithium ions required for charging and discharging of the lithium metal battery may be generated.

If the gel-type polymer electrolyte is present in the pores of the porous substrate, the interfacial resistance between the cathode, the anode, and the separator may be minimized, thereby facilitating lithium transfer.

According to embodiments, an anode active material layer may be disposed at the time of assembling the lithium metal battery. According to other embodiments, an anode active material layer may be included due to a lithium metal being plated after charging. In this regard, the anode active material layer may be a plated lithium layer.

Such an anode active material layer may include a lithium metal or a lithium alloy.

If the anode active material layer is disposed at the time of assembly, a carbon-based material alone, or a combination of a carbon-based material and at least one of a metal and a metalloid may be included.

The carbon-based material may include amorphous carbon, wherein the amorphous carbon may have an average particle diameter in a range of about 10 nm to about 100 nm. The carbon-based material may include carbon black (CB), acetylene black (AB), furnace black (FB), ketjen black (KB), graphene, or a combination thereof.

The anode material layer may include a lithium metal foil, lithium metal powder, a lithium alloy foil, lithium alloy powder, or a combination thereof, and the lithium alloy may include lithium and a first metal.

The first metal may include indium (In), silicon (Si), gallium (Ga), tin (Sn), aluminum (Al), Titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K), calcium (Ca), yttrium (Y), bismuth (Bi), tantalum (Ta), hafnium (Hf), barium (Ba), vanadium (V), strontium (St), lanthanum (La), or a combination thereof.

For example, the anode active material layer 22 may include a lithium foil, lithium powder, or a combination thereof. Examples of the lithium foil may include a lithium metal foil, a lithium alloy foil, or a combination thereof. The lithium metal may be in the form of powder, and lithium powder may include lithium metal powder, lithium alloy powder, or a combination thereof. The lithium alloy may be an alloy of lithium with another metal alloyable with lithium, and may include, for example, a lithium-silver alloy, a lithium-zinc alloy, a lithium-magnesium alloy, a lithium-tin alloy, or the like. The anode active material layer including a lithium metal foil may be, for example, a lithium metal layer. The anode active material layer including a lithium alloy foil may be, for example, a lithium alloy layer. The anode active material layer including lithium metal powder and/or lithium alloy powder may be introduced by coating the anode current collector with a slurry containing lithium powder and a binder. The binder may be, for example, a fluorine-based binder such as polyvinylidene fluoride (PVDF). The anode active material layer may be free of a carbon-based anode active material. In this regard, the anode active material layer may consist of a metal-based anode active material.

The anode current collector may be, for example, formed of a material that does not react with lithium, that is, a material that forms neither an alloy nor a compound with lithium. A material for forming the negative electrode current collector may be, for example, Cu, stainless steel, Ti, Fe, Co, Ni, and the like, but is not limited thereto. Any material available as an electrode current collector in the art may be used. The negative electrode current collector may be formed of one of the aforementioned metals, an alloy of two or more of the aforementioned metals, or a coating material. The negative electrode current collector may be, for example, in the form of a plate or foil.

In some embodiments, the cathode current collector may use, for example, a plate or a foil, each consisting of In, Cu, Mg, stainless steel, Ti, Fe, Co, Ni, Zn, a plate or foil made of aluminum (Al), germanium (Ge), lithium (Li) or an alloy thereof. The thickness of the cathode current collector may be, for example, in a range of about 1 μm to about 100 μm, about 1 μm to about 50 μm, about 5 μm to about 25 μm, or about 10 μm to about 20 μm.

The anode active material layer may include an anode active material and a binder.

The anode active material may be, for example, in the form of particles. The particle diameter of the anode active material in the form of particles may be, for example, in a range of about 10 nm to about 4 μm, about 10 nm to about 1 μm, about 10 nm to about 500 nm, about 10 nm to about 100 nm, or about 20 nm to about 80 nm. If the average particle diameter of the anode active material is within the ranges above, lithium may be more easily subjected to reversible plating and/or dissolution during charging and discharging. The average particle diameter of the anode active material may be, for example, a median diameter D50 measured by using a laser particle size distribution meter.

The anode active material may include, for example, one or more selected from a carbon-based anode active material and a metal or metalloid anode active material. The carbon-based anode active material may be, for example, amorphous carbon. Examples of the amorphous carbon may include CB, AB, FB, KB, graphene, or the like, but are not necessarily limited thereto. Any material categorized as amorphous carbon in the art may be used. The amorphous carbon may be carbon that has no or very low crystallinity, and in this regard, may be distinguished from crystalline carbon or graphite-based carbon. The metallic or metalloid anode active material may include at least one of Au, Pt, Pd, Au, Pt, Pd, Si, Ag, Al, Bi, Sn, and Zn, but is not necessarily limited thereto. Any material available as the metallic or metalloid anode active material capable of forming an alloy or compound with lithium in the art may be used. For example, Ni does not form an alloy with lithium, and thus Ni is not regarded as a metallic anode active material in the present specification. Among such anode active materials, the anode active material layer may include a single anode active material, or may include a mixture of a plurality of different anode active materials. The anode active material layer may include, for example, a mixture of amorphous carbon with at least one metal selected from Au, Pt, Pd, Si, Ag, Al, Bi, Sn, Zn. The mixing ratio of the mixture may be a weight ratio, and for example, may be in a range of about 10:1 to about 1:2, about 10:1 to about 1:1, about 7:1 to about 1:1, about 5:1 to about 1:1, or about 4:1 to about 2:1. The anode active material included in the anode active material layer may include, for example, a mixture of first particles consisting of amorphous carbon and second particles consisting of a metal or a metalloid. The metal may include, for example, Au, Pt, Pd, Si, Ag, Al, Bi, Sn, Zn, or the like. The amount of the second particle may be in a range of about 8 wt% to about 60 wt%, about 10 wt% to about 50 wt%, about 15 wt% to about 40 wt%, or about 20 wt% to about 30 wt%, based on the total weight of the mixture. If the amount of the second particles is within the ranges above, for example, the cycle characteristics of the lithium metal battery 1 may be further improved.

Examples of the binder included in the anode active material layer may include a styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, or the like, but are not limited thereto. Any material available as the binder in the art may be used. The binder may be used alone or in a combination of a plurality of different binders. If the anode active material layer does not include a binder, the anode active material layer may be easily detached from a ceramic coating layer 21 or the anode current collector 21. The amount of the binder included in the anode active material layer may be, for example, in a range of about 1 wt% to about 20 wt% based on the total weight of the anode active material layer.

The thickness of the anode active material layer may be, for example, in a range of about 0.1 μm to about 500 μm or about 100 μm to about 50 μm. The thickness of the anode active material layer may be, for example, in a range of about 1 % to about 50 %, about 1 % to about 30 %, about 1 % to about 10 %, or about 1 % to about 5 %, of the thickness of a cathode active material layer. If the thickness of the anode active material layer is excessively small, lithium dendrites formed between the anode active material layer and the anode current collector may cause the anode active material layer to collapse, making it difficult to improve the cycle characteristics of the lithium metal battery. If the thickness of the anode active material layer excessively increases, the lithium metal battery employing the anode 20 may suffer a decrease in the energy density, making it difficult to improve the cycle characteristics of the lithium metal battery.

If the thickness of the anode active material layer decreases, for example, the charge capacity of the anode active material layer may also decrease. The charge capacity of the anode active material layer may be, for example, in a range of about 0.1 % to about 50 %, about 1 % to about 30 %, about 1 % to about 10 %, about 1 % to about 5 %, or about 1 % to about 2 %, based on the charge capacity. If the charge capacity of the anode active material layer is excessively small, lithium dendrites formed between the anode active material layer and the anode current collector may cause the anode active material layer to collapse, making it difficult to improve the cycle characteristics of the lithium metal battery. If the charge

capacity of the anode active material layer excessively increases, the lithium metal battery employing the anode 20 may suffer a decrease in the energy density, making it difficult to improve the cycle characteristics of the lithium metal battery. The charge capacity of the cathode active material layer may be obtained by multiplying the charge capacity density (mAh/g) of the cathode active material by the mass of the cathode active material in the cathode active material layer. If several types of the cathode active material are used, for each cathode active material, the charge capacity density may be multiplied by the mass, and the sum of these values may be the charge capacity of the cathode active material layer. The charge capacity of the negative electrode active material layer may be calculated in the same way. The charge capacity of the anode active material layer may be obtained by multiplying the charge capacity density (mAh/g) of the anode active material by the mass of the anode active material in the anode active material layer. If several types of the anode active material are used, for each anode active material, the charge capacity density may be multiplied by the mass, and the sum of these values may be the charge capacity of the anode active material layer. Here, the charge capacity densities of the positive electrode active material and the negative electrode active material are capacities estimated by using an all-solid half-cell using lithium metal as a counter electrode. By the measurement of charging capacity using a solid-state half-cell, charging capacities of the cathode active material layer and the anode active material layer may be directly measured. If the measured charge capacity is divided by the mass of each active material, the charge capacity density may be obtained. In some embodiments, the charge capacities of the cathode active material layer and the anode active material layer may be initial charge capacity measured during charging at the first cycle.

[Lithium metal battery]

A lithium metal battery according to embodiments may include: a cathode; an anode; and an electrolyte between the cathode and the anode. The lithium metal battery may further include a separator. Such a lithium metal battery may provide excellent lifespan characteristics simultaneously. For example, the lithium metal battery may be a lithium primary battery, a lithium secondary battery, a lithium-sulfur battery, a lithium-air battery, etc., but is not limited thereto. Any lithium metal battery available in the art may be used.

The lithium metal battery may be, for example, prepared according to the following method, but the preparation method thereof is not limited thereto, and may be adjusted according to required conditions.

(Cathode)

First, a cathode active material composition may be prepared by mixing a cathode active material, a conductive material, a binder, and a solvent. The prepared cathode active material composition may be directly applied onto an aluminum current collector, and dried to prepare a cathode plate having a cathode active material layer formed thereon. In some embodiments, the cathode active material composition may be cast on a separate support, and then a film obtained by peeling off from the support may be laminated onto the aluminum current collector to prepare a cathode plate having a cathode active material layer formed thereon.

As the positive electrode active material, any material available as the lithium-containing metal oxide in the art may be used. For example, at least one composite oxide of lithium and a metal selected from Co, Mn, Ni, and a combination thereof may be used, and a specific example thereof may be a compound represented by one of the following formulae: $Li_aA_{1-}2$ (where 0.90≤a≤1 and 0≤b≤0.5); $Li_aE_{1-b}B_bO_{2-c}D_c$ (where 0.90≤a≤1, 0≤b≤0.5, and 0≤c≤0.05); $LiE_{2-b}B_bO_{4-c}D_c$ (where 0≤b≤0.5 and 0≤c≤0.05); $Li_aNi_{1-b-c}Co_bB_cO_\alpha$ (where 0.90≤a≤1, 0≤b≤0.5, 0≤c≤0.05, and 0<α≤2); $Li_aNi_{1-b-c}Co_bB_cO_{2-\alpha}F_\alpha$ (where 0.90≤a≤1, 0≤b≤0.5, 0≤c≤0.05, and 0<α≤2); $Li_aNi_{1-b-c}Co_bB_cO_{2-\alpha}F_2$ (where 0.90≤a≤1, 0≤b≤0.5, 0≤c≤0.05, and 0<α<2); $Li_aNi_{1-b-c}Mn_bB_cO_\alpha$ (where 0.90≤a≤1, 0≤b≤0.5, 0≤c≤0.05, and 0<α≤2); $Li_aNi_{1-b-c}Mn_bB_cO_{2-\alpha}F_\alpha$ (where 0.90≤a≤1, 0≤b≤0.5, 0≤c≤0.05, and 0<α<2); $Li_aNi_{1-b-c}Mn_bB_cO_{2-\alpha}F_2$ (where 0.90≤a≤1, 0≤b≤0.5, 0≤c≤0.05, and 0<α<2); $Li_aNi_bE_cG_dO_2$ (where 0.90≤a≤1, 0≤b≤0.9, 0≤c≤0.5, and 0.001≤d≤0.1); $Li_aNi_bCo_cMn_dGeO_2$ (where 0.90 ≤ a ≤ 1, 0 ≤ b ≤ 0.9, 0 ≤ c ≤ 0.5, 0 ≤ d ≤0.5, and 0.001 ≤ e ≤ 0.1); $Li_aNiG_bO_2$ (where 0.90 ≤ a ≤ 1 and 0.001 ≤ b ≤ 0.1); $Li_aCoG_bO_2$ (where 0.90 ≤ a ≤ 1 and 0.001 ≤ b ≤ 0.1);

$Li_aMnG_bO_2$ (where 0.90 ≤ a ≤ 1 and 0.001 ≤ b ≤ 0.1); $Li_aMn_2G_bO_4$ (where 0.90 ≤ a ≤ 1 and 0.001 ≤ b ≤ 0.1); $QO_2$; $QS_2$; $LiQS_2$; $V_2O_5$; $LiV_2O_5$; $LiIO_2$; $LiNiVO_4$; $Li_{(3-f)}J_2(PO_4)_3$ (were 0≤f≤2); $Li_{(3-f)}Fe_2(PO_4)_3$ (0≤f≤2); and $LiFePO_4$.

In the formulae above representing the compound, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound in which a coating layer is additionally provided on the surface of the aforementioned compound may be also used, and a mixture of the aforementioned compound and a compound additionally provided with a coating layer may be also used. The coating layer provided on the surface of the compound may include, for example, a coating element compound, such as an oxide of a coating element, hydroxide of a coating element, oxyhydroxide of a coating element, oxycarbonate of a coating element, or hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the positive electrode active material. The coating method may be, for example, spray coating, dipping method, or the like. A detailed description of the coating method will be omitted because it may be well understood by those skilled in the art.

For example, the cathode active material may be $Li_aNi_xCoyM_zO_{2-b}A_b$ (where 1.0≤a≤1.2, 0≤b≤0.2, 0.8≤x<1, 0<y≤0.3, 0<z≤0.3, and x+y+z=1, M may be manganese (Mn), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B) or a combination thereof, and A is F, S, Cl, Br, or a combination thereof), $LiNi_xCo_yMn_zO_2$ (where 0.8≤x≤0.95, 0≤y≤0.2, 0<z≤0.2, and x+y+z=1), $LiNi_xCo_yAl_zO_2$ (where 0.8≤x≤0.95, 0≤y≤0.2, 0<z≤0.2, and x+y+z=1), $LiNi_xCo_yMn_zAl_wO_2$ (where 0.8≤x≤0.95, 0≤y≤0.2, 0<z≤0.2, 0<w≤0.2, and x+y+z+w=1), $Li_aCo_xM_yO_{2-b}A_b$ (where 1.0≤a≤1.2, 0≤b≤0.2, 0.9≤x≤1, 0≤y≤0.1, and x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof), $Li_aNi_xMn_yM'_zO_{2-b}A_b$ (where 1.0≤a≤1.2, 0≤b≤0.2, 0<x≤0.3, 0.5≤y<1, 0<z≤0.3, and x+y+z=1, M' may be cobalt (Co), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B), or a combination thereof, and A may be F, S, Cl, Br, or a combination thereof), $Li_aM1_xM2_yPO_{4-b}X_b$ (where 0.90≤a≤1.1, 0≤x≤0.9, 0≤y≤0.5, 0.9<x+y<1.1, and 0≤b≤2, M1 may be chromium (Cr), manganese (Mn), iron (Fe), cobalt (Co), nickel (Ni), copper (Cu), zirconium (Zr), or a combination thereof, and M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P or a combination thereof), or $Li_aM3_zPO_4$ (where 0.90≤a≤1.1 and 0.9≤z≤1.1, and M3 may be chromium (Cr), manganese (Mn), iron (Fe), cobalt (Co), nickel (Ni), copper (Cu), zirconium (Zr), or a combination thereof).

Examples of the conductive material may be: carbon black, graphite particulates, natural graphite, artificial graphite, acetylene black, Ketjen black, carbon fibers; carbon nanotubes; metallic powder, metallic fiber, or metallic tube of copper, nickel, aluminum, silver, and the like; and a conductive polymer such as a polyphenylene derivative. However, embodiments are not limited thereto, and any suitable conductive material available in the art may be used. In some embodiments, the cathode may not include, for example, a separate conductive material.

Examples of the binder are a vinylidene fluoride/hexafluoropropylene copolymer, polyvinylidene fluoride, polyacrylonitrile, polymethyl methacrylate, polytetrafluoroethylene (PTFE), a mixture of the aforementioned polymers, a styrene butadiene-rubber polymer, and the like, and examples of the solvent are N-methyl pyrrolidone (NMP), acetone, water, and the like. However, embodiments are not limited thereto, and any suitable binder and solvent available in the art may be used.

A plasticizer or a pore-forming agent may be added to the cathode active material composition to form pores in an electrode plate.

The amount of each of the cathode active material, the conductive material, the binder, and the solvent used in the cathode may be at a level commonly used in a lithium battery. Depending on the intended use and composition of the lithium metal battery, one or more of the conductive material, the binder, and the solvent may be omitted.

The amount of the binder included in the cathode may be about 0.1 wt% to about 10 wt%, or about 0.1 wt% to about 5 wt%, relative to the total weight of the cathode active material layer. The amount of the cathode active material included in the cathode may be about 80 wt% to about 99 wt%, about 90 wt% to about 99 wt%, or about 95 wt% to about 99 wt%, with respect to the total weight of the cathode active material layer.

The cathode current collector may use, for example, a plate or a foil, each consisting of In, Cu, Mg, stainless steel, Ti, Fe, Co, Ni, Zn, a plate or foil made of aluminum (Al), germanium (Ge), lithium (Li) or an alloy thereof. The thickness of the cathode current collector 11 may be, for example, in a range of about 1 μm to about 100 μm, about 1 μm to about 50 μm, about 5 μm to about 25 μm, or about 10 μm to about 20 μm.

The cathode current collector 11 may include, for example, a base film and a metal layer disposed on one or both surfaces of the base film. The base film may include, for example, a polymer. The polymer may be, for example, a thermoplastic polymer. The polymer may include, for example, PET, PE, PP, PBT, PI, or a combination thereof. The base film may be, for example, an insulator. If the base film includes an insulating thermoplastic polymer, the base film may be softened or liquified upon the occurrence of a short circuit, so that the operation of a battery may stop and a rapid increase in current may then be suppressed. The metal layer may include, for example, In, Cu, Mg, stainless steel, Ti, Fe, Co, Ni, Zn, Al, Ge, or an alloy thereof. The metal layer may act as an electrochemical fuse, and thus may be cut in the event of an overcurrent to perform a short circuit prevention function. By adjusting the thickness of the metal layer, a limit current and a maximum current may be adjusted. The metal layer may be plated or deposited on the base film. If the thickness of the metal layer decreases, the limit current and/or the maximum current of the cathode current collector 11 may decrease, thereby improving the stability of the lithium metal battery 1. A lead tab may be added on the metal layer for the connection

with the outside. The lead tab may be welded to the metal layer or a laminate of metal layer/base film by ultrasonic welding, laser welding, spot welding, or the like. The metal layer may be electrically connected to the lead tab while the base film and/or the metal layer melts during welding. A metal chip may be added between the metal layer and the lead tab for stronger welding therebetween. The metal chip may be a thin piece of the same material as the metal in the metal layer. The metal chip may be, for example, a metal foil or a metal mesh. The metal chip may be, for example, an Al foil, a Cu foil, or an SUS foil. By welding the lead tab after disposing the metal chip on the metal layer, the lead tab may be welded to a laminate of metal chip/metal layer or a laminate of metal chip/metal layer/base film. During the welding, the metal layer or the laminate of metal layer/metal chip may melt so that the metal layer and/or the laminate of metal layer/metal chip may be electrically connected to the lead tab. The metal chip and/or the lead tab may be added to a portion on the metal layer. The thickness of the base film may be, for example, in a range of about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. If the thickness of the base film is within the ranges above, the weight of an electrode assembly may be reduced more effectively. The melting point of the base film may be, for example, in a range of about 100 °C to about 300 °C, about 100 °C to about 250 °C, or about 100 °C to about 200 °C. If the melting point of the base film is within the ranges above, the base film may be melted and easily connected to the lead tab in the process of welding the lead tab. To improve the adhesion between the base film and the metal layer, a surface treatment such as a corona treatment may be performed on the base film. The thickness of the metal layer may be, for example, in a range of about 0.01 $\mu$m to about 3 $\mu$m, about 0.1 $\mu$m to about 3 $\mu$m, about 0.1 $\mu$m to about 2 $\mu$m, or about 0.1 $\mu$m to about $\mu$m. If the thickness of the metal layer is within the ranges above, the stability of an electrode assembly may be secured while maintaining the conductive. The thickness of the metal chip may be, for example, in a range of about 2 $\mu$m to about 10 $\mu$m, about 2 $\mu$m to about 7 $\mu$m, or about 4 $\mu$m to about 6 $\mu$m. If the thickness of the metal chip is within the ranges above, the connection between the metal layer and the lead tab may be performed more easily. If the cathode current collector 11 has the aforementioned structure, the weight of the cathode 10 may be reduced, and consequently, the energy density of the cathode 10 and the lithium metal battery 1 may be improved.

(Electrolyte)

Next, the electrolyte may be prepared. The electrolyte may be, for example, a liquid electrolyte, a solid electrolyte, a gel electrolyte, or a combination thereof. The electrolyte may be, for example, an organic electrolyte solution. The organic electrolyte solution may be, for example, prepared by dissolving a lithium salt in an organic solvent.

For use as the organic solvent, any material available as the organic solvent in the art may be used. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, $\gamma$-butyrolactone, dioxolan, 4-methyl dioxolan, N, N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethyl ether, or a mixture thereof. organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N, N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, or a mixture thereof.

For use as the lithium salt, any material available as the lithium salt in the art may be also used. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where $1 \leq x \leq 20$ and $1 \leq y \leq 20$), LiCl, LiI, or a mixture thereof. The concentration of the lithium salt may be, for example, about 0.1 M to about 5.0 M.

The solid electrolyte may include, for example, an oxide-based solid electrolyte, a sulfide-based solid electrolyte, a polymer solid electrolyte, or a combination thereof.

The solid electrolyte may be, for example, an oxide-based solid electrolyte. The oxide-based solid electrolyte may include at least one selected from $Li_{1+x+y}Al_xTi_{2-x}Si_yP_{3-y}O_{12}$ (where $0<x<2$ and $0 \leq y<3$), $BaTiO_3$, $Pb(Zr,Ti)O_3$(PZT), $Pb_{1-x}La_xZr_{1-y}Ti_yO_3$(PLZT)(where $O \leq x<1$ and $O \leq y<1$), $PB(Mg_3Nb_{2/3})O_3$-$PbTiO_3$(PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (where $0<x<2$ and $0<y<3$), $Li_xAl_yTi_z(PO_4)_3$ (where $0<x<2$, $0<y<1$, and $0<z<3$), $Li_{1+x+y}(Al, Ga)_x(Ti, Ge)_{2-x}Si_yP_{3-y}O_{12}$ (where $0 \leq x \leq 1$ and $0 \leq y \leq 1$), $Li_xLa_yTiO_3$ (where $0<x<2$ and $0<y<3$), $Li_2O$, LiOH, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (where M may be Te, Nb, or Zr, and x may be an integer from 1 to 10). The solid electrolyte may be prepared by a sintering method or the like. For example, the oxide-based solid electrolyte may include a garnet-type solid electrolyte selected from $Li_7La_3Zr_2O_{12}$(LLZO) and $Li_{3+x}La_3Zr_{2-a}M_aO_{12}$ (M-doped LLZO)(where M may be Ga, W, Nb, Ta, or Al, and x may be an integer from 1 to 10).

The sulfide-based solid electrolyte may include, for example, lithium sulfide, silicon sulfide, phosphorus sulfide,

boron sulfide, or a combination thereof. Particles of the sulfide-based solid electrolyte may include $Li_2S$, $P_2S_5$, $SiS_2$, $GeS_2$, $B_2S_3$, or a combination thereof. The particles of the sulfide-based solid electrolyte particles may include $Li_2S$ or $P_2S_5$. The particles of the sulfide-based solid electrolyte particles are known to have higher lithium ionic conductivity than other inorganic compounds. For example, the sulfide-based solid electrolyte may include $Li_2S$ and $P_2S_5$. If the sulfide solid electrolyte material constituting the sulfide-based solid electrolyte includes $Li_2S-P_2S_5$, a mixing molar ratio of $Li_2S$ to $P_2S_5$ may be, for example, in a range of about 50:50 to about 90:10. In addition, an inorganic solid electrolyte prepared by adding $Li_3PO_4$, halogen, halogen compounds, $Li_{2+2x}Zn_{1-xG}eO_4$("LISICON", $0 \leq x<1$), $Li_{3+y}PO_{4-x}N_x$("LIPON", $0<x<4$, $0<y<3$), $Li_{3.25}Ge_{0.25}P_{0.75}S_4$("ThioLISICON"), $Li_2O-Al_2O_3-TiO_2-P_2O_5$("LATP"), and the like to an inorganic solid electrolyte of $Li_2S-P_2S_5$, $SiS_2$, $GeS_2$, $B_2S_3$, or a combination thereof, may be used as a sulfide solid electrolyte. Non-limiting examples of the sulfide solid electrolyte material are: $Li_2S-P_2S_5$; $Li_2S-P_2S_5-LiX$ (where X may be a halogen element); $Li_2S-P_2S_5-Li_2O$; $Li_2S-P_2S_5-Li_2O-LiI$; $Li_2S-SiS_2$; $Li_2S-SiS_2-LiI$; $Li_2S-SiS_2-LiBr$; $Li_2S-SiS_2-LiCl$; $Li_2S-SiS_2-B_2S_3-LiI$; $Li_2S-SiS_2-P_2S_5-LiI$; $Li_2S-B_2S_3$; $Li_2S-P_2S_5-Z_mS_n$ (where $0<m<10$, $0<n<10$, and Z may be Ge, Zn, or Ga); $Li_2S-GeS_2$; $Li_2S-SiS_2-Li_3PO_4$; and $Li_2S-SiS_2-Li_pMO_q$ (where $0<p<10$, $0<q<10$, and M may be P, Si, Ge, B, Al, Ga, or In). In this regard, the sulfide-based solid electrolyte material may be prepared by treating raw starting materials of the sulfide-based solid electrolyte material (e.g., $Li_2S$, $P_2S_5$, etc.) by a melt quenching method, a mechanical milling method, and the like. In some embodiments, a calcination process may be performed after the treatment. The sulfide-based solid electrolyte may be amorphous or crystalline, or may be in a mixed state.

The polymer solid electrolyte may include, for example, a mixture of a lithium salt and a polymer or a polymer including an ion-conducting functional group. The polymer solid electrolyte may be, for example, in a solid state at 25 °C and at 1 atm. The polymer solid electrolyte may not include liquid. The polymer of the polymer solid electrolyte may include, for example, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol(PEG), polyacrylonitrile (PAN), polytetrafluoro ethylene (PTFE), polyethylene dioxythiophene (PEDOT), polypyrrole (PPY), polyacrylonitrile (PAN), polyaniline, polyacetylene, nafion, aquivion, flemion, gore, aciplex, morgane ADP, sulfonated poly(ether ether ketone)(SPEEK), sulfonated poly(arylene ether ketone ketone sulfone)(SPAEKKS), sulfonated poly(aryl ether ketone)(SPAEK), poly[bis(benzimidazobenzisoquinolinones)] (SPBIBI), poly(styrene sulfonate) (PSS), lithium 9,10-diphenylanthracene-2-sulfonate ($DPASLi^+$), or a combination thereof, but embodiments are not limited thereto. Any material available as the polymer electrolyte in the art may be used. For use as the lithium salt, any material available as the lithium salt in the art may be used. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$(where x and y may each be between 1 to 20), LiCl, LiI, or a mixture thereof. The polymer included in the polymer solid electrolyte may be, for example, a compound including 10 or more, 20 or more, 50 or more, or 100 or more repeating units. The polymer included in the polymer solid electrolyte may have a weight average molecular weight of, for example, 1,000 dalton (Da) or more, 10,000 Da or more, 100,000 Da or more, or 1,000,000 Da or more.

The gel electrolyte may be, for example, a polymer gel electrolyte. The gel electrolyte may be in a gel state without including a polymer.

The polymer gel electrolyte may include, for example, a liquid electrolyte and a polymer, or an organic solvent and a polymer having an ion-conductive functional group. The polymer solid electrolyte may be, for example, in a solid state at 25 °C and at 1 atm. The polymer gel electrolyte may be, for example, in a gel state without including liquid. The liquid electrolyte used in the polymer gel electrolyte may be, for example, a mixture of ionic liquid, a lithium salt, and an organic solvent; a mixture of a lithium salt and an organic solvent; a mixture of ionic liquid and an organic solvent; or a mixture of a lithium salt, ionic liquid, and an organic solvent. The polymer used in the polymer gel electrolyte may be selected from polymers used in the polymer solid electrolyte. The organic solvent may be selected from organic solvents used in liquid electrolytes. The lithium salt may be selected from lithium salts used in polymer solid electrolytes. The ionic liquid may refer to a salt in a liquid state, and a molten salt at room temperature consisting solely of ions and having a melting point below room temperature. The ionic liquid may include, for example, at least one compound including a) at least one cation selected from ammonium, pyrrolidinium, pyridinium, pyrimidium, imidazolium, piperidinium, pyrazolium, oxazolium, pyridazinium, phosphonium, sulfonium, triazolium, and any mixture thereof, and b) at least one anion selected from $BF_4^-$, $PF_6^-$, $AsF_6^-$, $SbF_6^-$, $AlCl_4^-$, $H_SO_4^-$, $ClO_4^-$, $CH_3SO_3^-$, $CF_3CO_2^-$, $Cl^-$, Br, $I^-$, $SO_4^{2-}$, $CF_3SO_3^-$, $(FSO_2)_2N^-$, $(C_2F_2SO_2)_2N^-$, $(C_2F_2SO_2)(CF_2SO_2)N^-$, and $(CF_2SO_2)_2N^-$. The polymer solid electrolyte may be impregnated with a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. The polymer included in the polymer gel electrolyte may have a weight average molecular weight of, for example, 500 Da or more, 1,000 Da or more, 10,000 Da or more, 100,000 Da or more, or 1,000,000 Da or more .

(Anode)

The anode may include an anode current collector.

Although not shown in the drawings, the anode current collector 21 may include, for example, a base film and a metal layer disposed on one surface or both sides of the base film. The base film may include, for example, a polymer. The polymer may be, for example, a thermoplastic polymer. The polymer may include, for example, PET, PE, PP, PBT, PI, or a combination thereof. The polymer may be an insulating polymer. If the base film includes an insulating thermoplastic polymer, the base film may be softened or liquified upon the occurrence of a short circuit, so that the operation of a battery may stop and a rapid increase in current may then be suppressed. The metal layer may include, for example, Cu, stainless steel, Ti, Fe, Co, Ni, or an alloy thereof. The metal layer may correspond to, for example, a first metal substrate. The metal layer may further include a coating layer including a second metal. The anode current collector 21 may further include a metal chip and/or a lead tab. Details on the base film, the metal layer, the metal chip, and the lead tab of the anode current collector 21 may be understood by referring to the aforementioned cathode current collector. If the anode current collector 11 has such a structure, the weight of the anode 20 may be reduced, and consequently, the energy density of the anode 20 and a lithium battery may be improved.

An anode active material layer may be formed on the anode current collector. The anode active material layer may be formed as a lithium plated layer after charging. In some embodiments, the anode active material layer may be formed by using an anode active material during the battery assembly.

A process of preparing the anode active material layer by using an anode active material may be the same as the process of preparing the cathode active material layer, except that an anode active material is used instead of a cathode active material in forming the cathode active material layer.

The lithium metal battery may further include, for example, a thin film including an element capable of forming an alloy with lithium on one surface of the anode current collector. The thin film may be disposed between the anode current collector and the anode active material layer. The thin film may include, for example, an element capable of forming an alloy with Li. The element capable of forming an alloy with lithium may include, for example, Au, Ag, Zn, Ti, In, Si, Al, Bi, or the like, but is not necessarily limited thereto. Any material available as the element capable of forming an alloy with lithium in the art may be used. The thin film may be formed of one of these metals or an alloy of several types of metals. Due to the thin film disposed on one surface of the anode current collector, for example, the plated form of a first anode active material layer plated between the thin film and the anode active material layer may be further flattened, thereby further improving the cycle characteristics of the lithium metal battery.

(Separator)

The lithium metal battery may further include a separator between the cathode and the anode.

For use as the separator, any separator commonly used in lithium metal batteries may be used. For use as the separator, for example, a separator exhibiting low resistance to the movement of ions in the electrolyte and excellent electrolyte solution-retaining ability may be used. For example, the separator may be in the form of non-woven fabric or woven fabric, each being formed of a material selected from glass fiber, polyester, Teflon, polyethylene, polypropylene, polytetrafluoroethylene (PTFE), or a combination thereof. For example, in a lithium ion battery, a rollable separator formed of polyethylene, polypropylene, or the like, may be used, and in a lithium ion polymer battery, a separator having excellent organic electrolyte solution-retaining ability may be used.

The separator may be, for example, prepared according to the following example method, but the preparation method thereof is not limited thereto, and may be adjusted according to required conditions.

First, a separator composition may be prepared by mixing a polymer resin, a filler, and a solvent. The separator composition may be directly applied onto an electrode, and then dried, so as to form a separator. In some embodiments, after casting a support with the separator composition and drying it, a separator film peeled off from the support may be laminated onto an electrode, so as to prepare a separator.

The polymer used in the separator preparation is not limited to any particular polymer and may utilize any polymer available for use in a binder of an electrode plate. For example, a vinylidene fluoride/hexafluoropropylene copolymer, polyvinylidene fluoride (PVDF), polyacrylonitrile, polymethyl methacrylate, or a mixture thereof may be used.

The separator may include a liquid electrolyte, and the liquid electrolyte may be prepared by, for example, dissolving a lithium salt in an organic solvent.

For use as the organic solvent, any material available as the organic solvent in the art may be used. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, γ-butyrolactone, dioxolan, 4-methyl dioxolan, N, N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethyl

ether, or a mixture thereof. organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N, N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, or a mixture thereof.

For use as the lithium salt, any material available as the lithium salt in the art may be also used. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where $1 \le x \le 20$ and $1 \le y \le 20$), LiCl, LiI, or a mixture thereof. The concentration of the lithium salt may be, for example, about 0.1 M to about 5.0 M.

The lithium metal battery according to embodiments may further include a solid electrolyte. Examples of the solid electrolyte may include an oxide-based solid electrolyte, a sulfide-based solid electrolyte, or a combination thereof.

The solid electrolyte may be, for example, an oxide-based solid electrolyte. The oxide-based solid electrolyte may include at least one of $Li_{1+x+y}Ak_xTi_{2-x}Si_yP_{3-y}O_{12}$ (where $0<x<2$ and $0 \le y<3$), $Li_3PO_4$, $Li_xTi_y(PO_4)_3$ (where $0<x<2$ and $0<y<3$), $Li_xAl_yTi_z(PO_4)_3$ (where $0<x<2$, $0<y<1$, and $0<z<3$), $Li_{1+x+y}(Al, Ga)_x(Ti, Ge)_{2-x}Si_yP_{3-y}O_{12}$ (where $0 \le x \le 1$ and $0 \le y \le 1$), $Li_xLa_yTiO_3$ (where $0<x<2$ and $0<y<3$), $Li_2O$, LiOH, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (where M may be Te, Nb, or Zr, and x may be an integer from 1 to 10). The solid electrolyte may be prepared by a sintering method or the like. For example, the oxide-based solid electrolyte may include a garnet-type solid electrolyte selected from $Li_7La_3Zr_2O_{12}$(LLZO) and $Li_{3+x}La_3Zr_{2-a}M_aO_{12}$ (M-doped LLZO)(where M may be Ga, W, Nb, Ta, or Al, and x may be an integer from 1 to 10).

The sulfide-based solid electrolyte may include, for example, lithium sulfide, silicon sulfide, phosphorus sulfide, boron sulfide, or a combination thereof. Particles of the sulfide-based solid electrolyte may include $Li_2S$, $P_2S_5$, $SiS_2$, $GeS_2$, $B_2S_3$, or a combination thereof. The particles of the sulfide-based solid electrolyte particles may include $Li_2S$ or $P_2S_5$. The particles of the sulfide-based solid electrolyte particles are known to have higher lithium ionic conductivity than other inorganic compounds. For example, the sulfide-based solid electrolyte may include $Li_2S$ and $P_2S_5$. If the sulfide solid electrolyte material constituting the sulfide-based solid electrolyte includes $Li_2S$-$P_2S_5$, a mixing molar ratio of $Li_2S$ to $P_2S_5$ may be, for example, in a range of about 50:50 to about 90:10. In some embodiments, an inorganic solid electrolyte prepared by adding $Li_3PO_4$, a halogen, a halogen compound, $Li_{2+2x}Zn_{1??x}GeO_4$ ("LISICON", where $0 \le x<1$), $Li_{3+y}PO_{4-x}N_x$ ("LIPON")(where $0<x<4$ and $0<y<3$), $Li_{3.25}Ge_{0.25}P_{0.75}S_4$("ThioLISICON"), $Li_2O$-$Al_2O_3$-$TiO_2$-$P_2O_5$("LATP"), or the like to an inorganic solid electrolyte, such as $Li_2S$-$P_2S_5$, $SiS_2$, $GeS_2$, $B_2S_3$, or a combination thereof, may be used as the sulfide solid electrolyte. Non-limiting examples of the sulfide solid electrolyte material are: $Li_2S$-$P_2S_5$; $Li_2S$-$P_2S_5$-LiX (where X may be a halogen element); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$ -$P_2S_5$-$Z_mS_n$ (where $0<m<10$, $0<n<10$, and Z may be Ge, Zn, or Ga); $Li_2S$-$GeS_2$; $Li_2S$-$SiS_2$-$Li_3PO_4$; and $Li_2S$-$SiS_2$-$Li_pMO_q$ (where $0<p<10$, $0<q<10$, and M may be P, Si, Ge, B, Al, Ga, or In). In this regard, the sulfide-based solid electrolyte material may be prepared by treating raw starting materials of the sulfide-based solid electrolyte material (e.g., $Li_2S$, $P_2S_5$, etc.) by a melt quenching method, a mechanical milling method, and the like. In some embodiments, a calcination process may be performed after the treatment. The sulfide-based solid electrolyte may be amorphous or crystalline, or may be in a mixed state.

(Lithium metal battery)

Referring to FIG.6, the lithium metal battery 1 according to embodiments may include a cathode 3, an anode 2, and an electrolyte 4, wherein the anode is the same as the aforementioned anode. A gel-type polymer electrolyte (not shown) may be disposed between the electrolyte 4 and the cathode 3. The cathode 3, the anode 2, and the electrolyte 4 may be wound or folded to form a battery structure. The formed battery structure may be accommodated in a battery case 5. Then, the battery case 5 may be filled with an organic electrolyte solution, and then sealed with a cap assembly, thereby completing the manufacture of the lithium metal battery 1. The battery case 5 may be a cylindrical-type, but the shape of the battery case 5 is not limited thereto. For example, the battery case 5 may be a square-type, a thin-film type, or the like.

Referring to FIG. 6, the lithium metal battery 1 according to embodiments may include the cathode 3, the anode 2, and the separator 4. The electrolyte 4 may be disposed between the cathode 3 and the anode 2, and the cathode 3, the anode 2, and the electrolyte 4 may be wound or folded to form the battery structure 7. The formed battery structure may be accommodated in a battery case 5. The lithium metal battery 1 may include electrode tabs 8 serving as an electrical path for inducing a current formed in the battery structure 7 to the outside. Then, the battery case 5 may be filled with an organic electrolyte solution, and then sealed, thereby completing the manufacture of the lithium metal battery 1. The battery case 5 may be a square-type, but the shape of the battery case 5 is not limited thereto. For example, the battery case 5 may be a cylindrical-type, a thin-film type, or the like.

Referring to FIG. 7, the lithium metal battery 1 according to embodiments may include the cathode 3, the anode 2, and the electrolyte 4. The electrolyte 4 may be disposed between the cathode 3 and the anode 2 to form the battery

structure 7. A gel-type polymer electrolyte between a separator and the cathode may not be illustrated in the drawing. The battery structure 7 may be laminated in a bi-cell structure, and then accommodated in the battery case 5. The lithium metal battery 1 may include the electrode tab 8 serving as an electrical path for inducing a current formed in the battery structure 7 to the outside. Then, the battery case 5 may be filled with an organic electrolyte solution, and then sealed, thereby completing the manufacture of the lithium metal battery 1. The battery case 5 may be a square-type, but the shape of the battery case 5 is not limited thereto. For example, the battery case 5 may be a cylindrical-type, a thin-film type, or the like.

A pouch-type lithium metal battery corresponds to use of a pouch as a battery case for each of the lithium batteries of FIGS. 7 and 8. A pouch-type lithium metal battery may include one or more battery structures. The electrolyte 4 may be disposed between the cathode 3 and the anode 2, or the electrolyte 4 and a separator may be disposed between the cathode 3 and the anode 2, so as to form the battery structure 7. The battery structure 7 may be laminated as a bi-cell structure, impregnated with liquid electrolyte, and then accommodated and sealed in a pouch, thereby completing the manufacture of a pouch-type lithium metal battery. For example, although not illustrated in the drawings, the cathode 3, anode 2, and the separator may be simply laminated in the form of an electrode assembly and then accommodated in a pouch, or may be wound or folded into a jelly roll-type electrode assembly and then accommodated in a pouch. Then, after injecting an organic electrolyte solution into the pouch, and the pouch may be sealed, thereby completing the manufacture of the lithium metal battery.

The lithium metal battery of the present disclosure may have excellent discharge capacity and lifespan characteristics, and may also have high energy density, and thus may be, for example, used in an electric vehicle (EV). For example, the lithium metal battery may be used in a hybrid vehicle, such as a plug-in hybrid electric vehicle (PHEV) or the like. The lithium metal battery may also be applicable to the fields requiring high-power storage. For example, the lithium metal battery may be used in an electric bicycle, a power tool, or the like.

Multiple units of the lithium metal battery may be laminated to form a battery module, and multiple units of such a battery module may form a battery pack. The battery pack may be used in a device that requires high capacity and large output. For example, the battery pack may be used in a laptop computer, a smart phone, an electronic vehicle, or the like. The battery module may include, for example, multiple batteries and a frame that holds the multiple batteries. The battery pack may include, for example, multiple battery modules and a bus bar that connects the battery modules together. The battery module and/or the battery pact may further include a cooling device. The multiple battery packs may be managed by a battery management system. The battery management system may include a battery pack and an electronic control device connected to the battery pack.

[Method of preparing lithium metal battery]

A method of preparing a lithium metal battery according to embodiments may include: preparing an anode current collector; forming a protective layer by applying and drying a composition for forming a protective layer onto the anode current collector; preparing an electrolyte; preparing a cathode; and preparing an assembly by stacking the anode current collector with the protective layer, the electrolyte, and the cathode.

The composition for forming a protective layer may further include the second polymer having a functional group crosslinkable with the first polymer including a hydroxy group. The protective layer formed by using the composition for forming a protective layer may further include a cross-linked polymer of the first polymer and the second polymer. The mixing ratio of the first polymer including a hydroxy group to the second polymer may be adjusted to be in a range of about 50:50 to about 99:1, or about 60:40 to about 90:10.

The second polymer may include at least one of fluorinated polyamic acid and fluorinated polyimide, each including a carboxyl group.

If the second polymer is fluorinated polyamic acid including a carboxyl group, the composition for forming a protective layer including the second polymer may be applied to the anode current collector, dried, and then heat-treated to carry out a cross-linking reaction between the first polymer and the second polymer, so as to form the protective layer including a cross-linked polymer. The temperature at which the heat treatment is performed may vary depending on the compositions of the first polymer and the second polymer, but may be, for example, performed at a temperature in a range of about 80 °C to about 200 °C, about 100 °C to about 200 °C, about 150 °C to about 200 °C, or about 150 °C to about 190 °C. If the temperature at which the heat treatment is performed is within the ranges above, the protective layer formed on the electrode surface may minimize the exposure of an electrolyte solution to the electrode surface and create a uniform flow of lithium ions across the electrode, thereby effectively suppressing the growth of lithium dendrites.

The composition for forming a protective layer may further include a lithium salt.

The lithium metal battery may further include a separator. The separator may further include a liquid electrolyte and/or a gel-type polymer electrolyte.

Hereinafter, the present creative idea will be described in more detail through Examples and Comparative Examples below. However, these examples are provided to represent the creative idea, and the scope of the present creative idea is not limited thereto.

Preparation Example 1: Preparation of polymer solution containing polyvinyl alcohol (PVA) and fluorinated polyamic acid of Formula 10

PVA was purchased from Sigma-Aldrich. A synthesis process of fluorinated polyamic acid of Formula 10 is as follows.

First, a round-bottom flask was filled with nitrogen, and 4.9411 g (0.00154 mol) of 2,2'-bis (trifluoromethyl) benzidine (TFDB) and 0.7825 g (0.00051 mol) of diaminobenzic acid (DABA) were added thereto. Then, 131 g of N-methylpyrrolidone (NMP) was added, and the mixed solution was completely dissolved by using a mechanical stirrer. Next, 9.2764 g (0.0209 mol) of 4,4'-(hexafluoroisopropylidene) (6FDA) was added thereto and stirred at room temperature (25 °C) for 24 hours, so as to prepare polyamic acid represented by Formula 9. The polyamic acid thus prepared was a random copolymer. The molar ratio of 6FDA:TFDB:DABAwas 4:3:1.

In Formula 9, the molar ratio of n:m was 1:3.

To the polyamic acid of Formula 9 (6FDA:TFDB:DABA, acid equivalent of 210 g/eq), 10 g of LiOH aqueous solution was added with respect to the equivalent ratio of the carboxylic acid, so as to prepare water-soluble polyamic acid represented by Formula 10 in which 0.5 equivalents of COOH in the COOH of the polyamic acid was substituted with COO-Li+. Here, the LiOH aqueous solution had 0.5 equivalents relative to 1 equivalent of carboxylic acid of the polyamic acid.

Formula 9

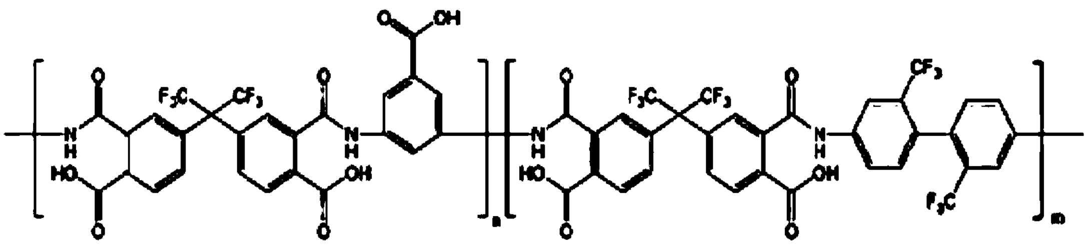

wherein, in the formulae above, n was 0.25, and m was 0.75.

The water-soluble polyamic acid of Formula 10 and the PVA (weight average molecular weight, Mw=89,000, hydrolysis +99 %) were mixed in a weight ratio of 20:80, so as to prepare a polymer solution of 10 wt% solids.

Formula 10

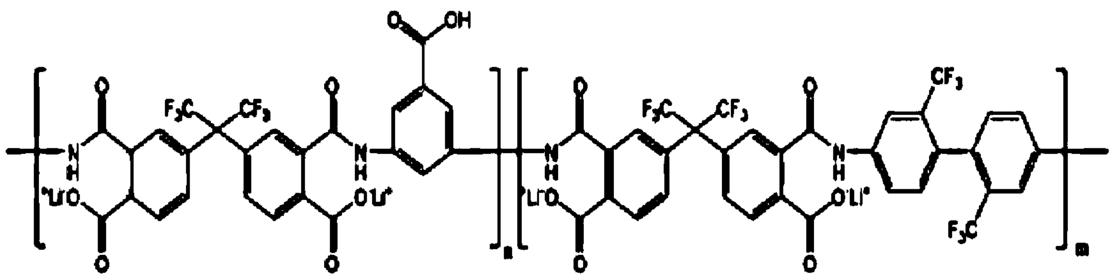

wherein, in the formulae above, n was 0.25, and m was 0.75.

Example 1: Protective layer: Boric acid 0.5 %+ PVA/PI-F

The polymer solution of 10 wt% solids prepared according to Preparation Example 1

by mixing the water-soluble polyamic acid of Formula 10 with PVA in a weight ratio of 20:80, and boric acid ($H_3BO_3$) were prepared, and then mixed with NMP as a solvent, so as to prepare a composition for forming a protective layer. The amount of the boric acid was 0.5 parts by weight based on 100 parts by weight of the composition for forming a protective layer, and the amount of the solvent was 99.5 parts by weight based on 100 parts by weight of the composition for forming a protective layer.

The composition for forming a protective layer was applied onto a 10 μm-thick-copper foil as an anode current collector, dried in a vacuum oven at 80 °C for 30 minutes, and then heat-treated at 180 °C for 30 minutes, so as to prepare an anode. The anode thus prepared had a structure in which the lithium metal thin film disposed on the copper current collector was coated with the protective layer to a thickness of 10 μm.

By the heat treatment, the carboxyl group included in the polyamic acid of Formula 10 reacted with the hydroxy group of the PVA to form an ester linker, and in this regard, a cross-linked polymer (PVA/PI-F) of polyimide of Formula 12 and the PVA was formed. The cross-linked polymer PVA/PI-F may have a three-dimensional network structure in which the polyimide of Formula 12 and the PVA were cross-linked at multiple points.

Formula 12

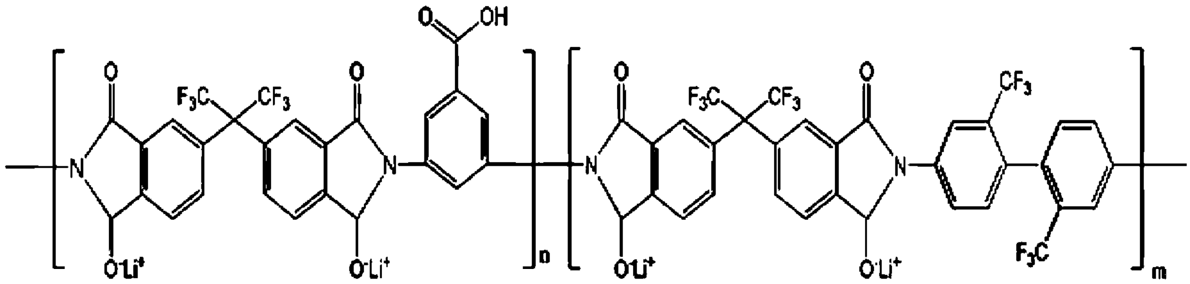

wherein, in the formula above, n was 0.25, m was 0.75, and the weight average molecular weight of the polyimide of Formula 12 was about 2,000,000.

A 20 μm-thick polyethylene single layer as a separator was laminated on the anode, and a cathode was laminated on the other side of the separator, so as to prepare a laminate. A liquid electrolyte was injected into the laminate thus prepared, so as to prepare a lithium metal battery.

The lithium metal battery had a cathode/gel-type polymer electrolyte(separator)/protective layer/anode current collector structure. For use as the liquid electrolyte, a solution in which 0.6 M of $LiBF_4$ and 0.6 M of lithium difluoro(oxalate) borate (LiDFOB) were added to a mixed solvent of diethyl carbonate (DEC) and fluoroethylene carbonate (FEC) mixed at a volume ratio of 2:1.

The cathode was prepared as follows.

$Li_{1.04}Ni_{0.88}Co_{0.1}Al_{0.02}O_2$ powder and a carbon-based conductive material(Super-P; Timcal Ltd.) were mixed uniformly in a weight ratio of 90:5, and a polyvinylidene fluoride (PVDF) binder solution was added thereto, so as to prepare a cathode active material slurry in which the weight ratio of the active material:carbon-based conductive material:binder was 90:5:5.

The slurry thus prepared was applied onto a 15 μm-thick-aluminum substrate by using a doctor blade, dried at 120 °C under reduced pressure, and then rolled into a sheet form by using a roll press, so as to prepare a cathode.

Example 2: Protective layer: Boric acid 1 %+ PVA/PI-F

A protective layer and a lithium metal battery including the same were prepared in the same manner as in Example 1, except that the amount of boric acid was changed to 1 wt% based on 100 parts by weight of the composition for forming a protective layer.

Example 3: Protective layer: Boric acid 2 %+ PVA/PI-F

A protective layer and a lithium metal battery including the same were prepared in the same manner as in Example 1, except that the amount of boric acid was changed to 2 wt% based on 100 parts by weight of the composition for forming a protective layer.

Example 4: Protective layer: Boric acid 5 %+ PVA/PI-F

A protective layer and a lithium metal battery including the same were prepared in the same manner as in Example 1, except that the amount of boric acid was changed to 5 wt% based on 100 parts by weight of the composition for forming a protective layer.

Example 5: Protective layer: Boric acid 0.5 %+ CMC

A protective layer and a lithium metal battery including the same were prepared in the same manner as in Example 1,
except that the amount of boric acid was changed to 0.5 wt% based on 100 parts by weight of the composition for forming a

protective layer, and carboxymethyl cellulose (CMC) was used instead of the polymer solution of Preparation Example 1.

Example 6

A protective layer and a lithium metal battery including the same were prepared in the same manner as in Example 1, except that hydroxyethyl methacrylate was used instead of the water-soluble polyamic acid of Formula 10 in forming the polymer solution with solids content of 10 wt%.

Example 7

A protective layer and a lithium metal battery including the same were prepared in the same manner as in Example 1, except that hydroxypropyl acrylate was used instead of the water-soluble polyamic acid of Formula 10 in forming the polymer solution with solids content of 10 wt%.

Comparative Example 1

A protective layer and a lithium metal battery including the same were prepared in the same manner as in Example 1, except that boric acid ($H_3BO_3$) was not added in preparing the composition for forming a protective layer.

Comparative Example 2

A composition for forming a protective layer was prepared by adding polyethylene oxide (MV: 4,000,000) and lithium bis(trifluoromethane sulfonyl)imide (LiTFSI, $((CF_3SO_2)_2NLi)$ to an acetonitrile solvent and mixed to have a ratio of EO:Li=9:1 (repeating unit of EO : PEO).

A protective layer and a lithium metal battery including the same were prepared in the same manner as in Example 1, except that the composition for forming a protective layer of Composition Example 2 was used instead of the composition for forming a protective layer of Example 1.

Evaluation Example 1: Lifespan at room temperature (25 °C)

The charge/discharge characteristics for the lithium metal batteries of Examples 1 to 7 and Comparative Examples 1 and 2 were evaluated under the following conditions.

Each lithium metal battery was charged with a constant current of 0.1 C rate at 25 °C until a voltage reached 4.3 V (vs. Li), and was then cut-off at a current of 0.05 C rate while maintaining the voltage at 4.3 V in a constant voltage mode. Subsequently, each lithium metal battery was discharged with a constant current of 0.1 C rate until the voltage reached 3.6 V (vs. Li) during discharging (formation cycle).

Each lithium metal battery having undergone the formation cycle was charged with a constant current of 0.2 C rate at 25 °C until a voltage reached 4.3 V (vs. Li), and was then cut-off at a current of 0.05 C rate while maintaining the voltage at 4.3 V in a constant voltage mode. Subsequently, each lithium metal battery was discharged with a constant current of 0.5 C rate until the voltage reached 3.6 V (vs. Li) during discharging (1st cycle). This cycle was repeated until the $100^{th}$ cycle under the same conditions.

In all charging and discharging cycles, a 10-minute stop time was provided after every one charging and discharging cycle. Some of the results of the charge/discharge test at room temperature are shown in Table 1 below. Capacity retention ratio was defined by Equation 1 below.

$$\text{Capacity retention (\%)}=(\text{discharge capacity in }100^{th}\text{ cycle/discharge capacity in }1^{st}\text{ cycle})\times 100 \qquad \text{Equation 1}$$

[Table 1]

| Class | Capacity retention rate (%) |
|---|---|
| Example 1 | 68.4 |
| Example 2 | 73.1 |
| Example 3 | 67.9 |
| Example 4 | 64.3 |
| Example 5 | 61.1 |

(continued)

| Class | Capacity retention rate (%) |
|---|---|
| Comparative Example 1 | 55.7 |
| Comparative Example 2 | 43.2 |

As shown in Table 1, the lithium metal battery of Comparative Example 1 had a decreased capacity retention rate due to a side reaction between lithium and an electrolyte caused by the growth of dendrites due to the absence of a protective layer, and the lithium metal battery of Comparative Example 2 had a structure in which a polyethylene oxide protective layer was formed on the anode current collector, but the protective layer was not effective enough to suppress the growth of dendrites. Thus, compared to the lithium metal batteries of Examples 1 to 5, if the protective layer was formed on the anode current collector, the physical properties of the protective layer increased without a decrease in the ion conductivity, resulting in a degradation in the capacity reaction characteristics of the lithium metal battery.

The capacity retention rates of the lithium metal batteries of Examples 6 and 7 were similar to the capacity retention rate of the lithium metal battery of Example 1.

Evaluation Example 2: Lifespan at high temperature (45 °C)

The charge/discharge characteristics for the lithium metal batteries of Examples 1 to 5 and Comparative Examples 1 and 2 were evaluated under the following conditions.

Each lithium metal battery was charged with a constant current of 0.1 C rate at 45 °C until a voltage reached 4.3 V (vs. Li), and was then cut-off at a current of 0.05 C rate while maintaining the voltage at 4.3 V in a constant voltage mode. Subsequently, each lithium metal battery was discharged with a constant current of 0.1 C rate until the voltage reached 3.6 V (vs. Li) during discharging (formation cycle).

Each lithium metal battery having undergone the formation cycle was charged with a constant current of 0.2 C rate at 25 °C until a voltage reached 4.3 V (vs. Li), and was then cut-off at a current of 0.05 C rate while maintaining the voltage at 4.3 V in a constant voltage mode. Subsequently, each lithium metal battery was discharged with a constant current of 0.5 C rate until the voltage reached 3.6 V (vs. Li) during discharging (1st cycle). This cycle was repeated until the $100^{th}$ cycle under the same conditions.

In all charging and discharging cycles, a 10-minute stop time was provided after every one charging and discharging cycle. Some of the results of the charging and discharging test at room temperature are shown in Table 2. Capacity retention ratio was defined by Equation 2 below.

Capacity retention (%)=(discharge capacity in $100^{th}$ cycle/discharge capacity in $1^{st}$ cycle)$\times$100 Equation 2

[Table 2]

| Class | Capacity retention rate (%) |
|---|---|
| Example 1 | 84.5 |
| Example 2 | 85.1 |
| Example 3 | 83.7 |
| Example 4 | 80.9 |
| Example 5 | 75.7 |
| Comparative Example 1 | 74.1 |
| Comparative Example 2 | 65.3 |

As shown in Table 2, the lithium metal battery of Comparative Example 1 had a decreased capacity retention rate at high temperature due to a side reaction between lithium and an electrolyte caused by the growth of dendrites due to the absence of a protective layer, and the lithium metal battery of Comparative Example 2 had a structure in which a polyethylene oxide protective layer was formed on the anode current collector, but the protective layer was not effective enough to suppress the growth of dendrites, resulting in degraded characteristics of capacity reaction rate at high temperature compared to the lithium metal batteries of Examples 1 to 5.

Evaluation Example 3: High-rate characteristics

Each of the lithium metal batteries prepared in Examples 1 to 5 and Comparative Examples 1 and 2 was charged with a constant current of 0.1 C rate at 25 °C until a voltage reached 4.3 V (vs. Li), and was then cut-off at a current of 0.05 C rate while maintaining the voltage at 4.3 V in a constant voltage mode. Subsequently, each lithium metal battery was discharged with a constant current of 0.1 C rate until the voltage reached 3.6 V (vs. Li) during discharging (formation cycle).

Each lithium metal battery having undergone the formation cycle was charged with a constant current of 0.2 C rate at 25 °C until a voltage reached 4.3 V (vs. Li), and was then cut-off at a current of 0.05 C rate while maintaining the voltage at 4.3 V in a constant voltage mode. Subsequently, each lithium metal battery was discharged with a constant current of 0.5 C rate until the voltage reached 3.6 V (vs. Li) during discharging (1st cycle).

The lithium metal batteries that have undergone the $1^{st}$ cycle were charged with in a constant current mode at a current rate of 0.2 C at 25 °C until the voltage reached 4.3 V (vs. Li), and then, while maintaining the voltage of 4.3 V in the constant voltage mode, the voltage was cut-off at a current rate of 0.05 C. Subsequently, the batteries were discharged at a constant current rate of 0.2 C until the voltage reached 2.8 V (vs. Li) ($2^{nd}$ cycle).

The $2^{nd}$ cycle was repeated until the $7^{th}$ cycle under the same conditions.

The lithium metal batteries that have undergone the $7^{th}$ cycle were charged with in a constant current mode at a current rate of 0.33 C at 25 °C until the voltage reached 4.35 V (vs. Li), and then, while maintaining the voltage of 4.35 V in the constant voltage mode, the voltage was cut-off at a current rate of 0.05 C. Subsequently, the batteries were discharged at a constant current rate of 0.5 C until the voltage reached 2.8 V (vs. Li) ($8^{th}$ cycle).

The $8^{th}$ cycle was repeated until the $17^{th}$ cycle under the same conditions.

The lithium metal batteries that have undergone the $17^{th}$ cycle were charged with in a constant current mode at a current rate of 0.33 C at 25 °C until the voltage reached 4.35 V (vs. Li), and then, while maintaining the voltage of 4.35 V in the constant voltage mode, the voltage was cut-off at a current rate of 0.05 C. Subsequently, the batteries were discharged at a constant current rate of 1 C until the voltage reached 2.8 V (vs. Li) ($18^{th}$ cycle).

The $18^{th}$ cycle was repeated until the $25^{th}$ cycle under the same conditions.

The lithium metal batteries that have undergone the $25^{th}$ cycle were charged with in a constant current mode at a current rate of 0.33 C at 25 °C until the voltage reached 4.35 V (vs. Li), and then, while maintaining the voltage of 4.35 V in the constant voltage mode, the voltage was cut-off at a current rate of 0.05 C. Subsequently, the batteries were discharged at a constant current rate of 2 C until the voltage reached 2.8 V (vs. Li) ($26^{th}$ cycle).

The $26^{th}$ cycle was repeated until the $35^{th}$ cycle under the same conditions.

The lithium metal batteries that have undergone the $35^{th}$ cycle were charged with in a constant current mode at a current rate of 0.33 C at 25 °C until the voltage reached 4.35 V (vs. Li), and then, while maintaining the voltage of 4.35 V in the constant voltage mode, the voltage was cut-off at a current rate of 0.05 C. Subsequently, the batteries were discharged at a constant current rate of 3 C until the voltage reached 2.8 V (vs. Li) ($36^{th}$ cycle).

The lithium metal batteries that have undergone the $36^{th}$ cycle were charged with in a constant current mode at a current rate of 0.33 C at 25 °C until the voltage reached 4.35 V (vs. Li), and then, while maintaining the voltage of 4.35 V in the constant voltage mode, the voltage was cut-off at a current rate of 0.05 C. Subsequently, each of the lithium batteries was discharged at a constant current of 0.2 C rate until the voltage reached 2.8 V (vs. Li) ($45^{th}$ cycle), and such a cycle was repeated under the same conditions until the $100^{th}$ cycle.

After every one charge/discharge cycle in all the charge/discharge cycles, there was a 10-minute pause time.

Some of the results of the charge/discharge test are shown in Table 3. FIGS. 3 and 4 show changes in the capacity retention rates and changes in the capacity characteristics, respectively, according to the number of cycles of the lithium metal batteries of Example 1 and Comparative Example 1.

The high-rate characteristics were defined by Equation 3:

$$\text{High-rate characteristics [\%]}=[\text{discharge capacity at } 25^{th} \text{ cycle (1C rate) / discharge capacity at } 2^{nd} \text{ cycle (0.2C rate)}] \times 100 \qquad \text{Equation 3}$$

[Table 3]

| Class | Composition of protective layer | High-rate characteristics (%) |
|---|---|---|
| Example 1 | Boric acid 0.5 %+ PVA/PI-F | 84.3 |
| Example 2 | Boric acid 1 %+ PVA/PI-F | 84.1 |
| Example 3 | Boric acid 2 %+ PVA/PI-F | 83.3 |
| Example 4 | Boric acid 5 %+ PVA/PI-F | 81.0 |

(continued)

| Class | Composition of protective layer | High-rate characteristics (%) |
|---|---|---|
| Example 5 | Boric acid 0.5 %+ CMC | 73.5 |
| Comparative Example 1 | PVA/PI-F | 72.1 |
| Comparative Example 2 | PEO/LiTFSi (9:1) | 65.3 |

Referring to Table 3, in the lithium metal batteries of Examples 1 to 4, the protective layer on the anode current collector included boric acid so that the transfer of lithium ions was improved and the ion conductivity characteristics were improved accordingly. The lithium metal battery of Comparative Example 2 included the polyethylene oxide protective layer, and thus had improved high-rate characteristics compared to the lithium metal battery of Comparative Example 1. However, compared to the lithium metal batteries of Examples 1 to 4 including the PVA/PI-f and the boric acid and the lithium metal battery of Example 5 including the CMC and the boric acid, the lithium metal battery of Comparative Example 2 showed poor results in the high-rate characteristics. From this, it was confirmed that the physical strength of the protective layer in each of the lithium metal batteries of Examples 1 to 5 increased, thereby further increasing the stability and improving the high-rate characteristics upon the improved ion conductivity.

Evaluation Example 4: SEM analysis I

For the lithium metal battery of Example 1, the laminate structure of the anode current collector/protective layer was examined by using field emission-scanning electron microscope (FE-SEM), and the results are shown in FIG. 5.
Referring to FIG. 5, it was confirmed that the protective layer was formed to a thickness of about 1.5 μm.

Evaluation Example 5: SEM analysis II

After the lithium metal battery of Example 1 was charged to state of charge (SOC) 100 % at 25 °C, the lithium metal battery was disassembled, and the cross-section and thickness of lithium bottom electrodeposition and uniform protective layer were measured by using SEM. The analysis results are shown in FIGS. 6A to 6C.
FIG. 6A is an SEM image showing a state of a protective layer laminated on the anode current collector in the lithium metal battery of Example 1. FIGS. 6B and 6C are SEM images showing a structure in which a lithium metal layer was plated on the anode current collector and the protective layer was formed on the plated lithium metal layer.
Referring to FIG. 6A, it was confirmed that the protective layer was formed on the anode current collector. Referring to FIGS. 6B and FIG. 6C, it was also confirmed that the thickness of the plated lithium metal layer was relatively small if boric acid was added, and that the resulting plated lithium metal layer was densely formed.

Evaluation Example 6: Ion conductivity

For the lithium metal batteries of Examples 1 to 5, the ion conductivity was examined, and the results are shown in Table 4.

Table 4

| Class | Composition of protective layer | Ion conductivity (mS/cm) |
|---|---|---|
| Example 1 | Boric acid 0.5 %+ PVA/PI-F | 0.53 |
| Example 2 | Boric acid 1 %+ PVA/PI-F | 0.57 |
| Example 3 | Boric acid 2 %+ PVA/PI-F | 0.71 |
| Example 4 | Boric acid 5 %+ PVA/PI-F | 0.68 |
| Example 5 | Boric acid 0.5 %+ CMC | 0.40 |

As shown in Table 4, it was confirmed that the lithium metal batteries of Examples 1 to 5 had excellent ion conductivity.
Although exemplary embodiments have been described in detail with reference to the accompanying drawings, the present inventive concept is not limited to these examples. It is obvious that those skilled in the art to which the present creative idea belongs can derive various examples of changes or modifications within the scope of the technical idea described in the claims, and these, of course, belong to the technical scope of the present creative idea.

## Claims

1. An anode for a lithium metal battery comprising:

   an anode current collector; and
   a protective layer formed on the anode current collector,
   wherein the anode further comprises an anode active material layer between the anode current collector and the protective layer, or is free of an anode active material layer,
   wherein the protective layer comprises a first polymer including a hydroxy group, and
   i) boric acid ($H_3BO_3$), ii) a hydrate of boron oxide ($B_2O_3$) and water, or a combination thereof.

2. The anode as claimed in claim 1, wherein the first polymer comprises a polymerization product of at least one monomer selected from: carboxymethyl cellulose (CMC), polyvinyl alcohol (PVA), vinylacetate, butyl (meta)acrylate, 2-hydroxyethyl (meta)acrylate, 2-hydroxypropyl (meta)acrylate, 4-hydroxybutyl (meta)acrylate, 6-hydroxyhexyl (meta) acrylate, 8-hydroxyoctyl (meta)acrylate, 2-hydroxyethyleneglycol (meta)acrylate, 2-hydroxypropyleneglycol (meta)acrylate, acrylic acid, methacrylic acid, 2-(meta)acryloyloxy acetic acid, 3-(meta)acryloyloxy propyl acid, 4-(meta)acryloyloxy butyl acid, itaconic acid, maleic acid, 2-isocyanatoethyl (meta)acrylate, 3-isocyanatopropyl (meta)acrylate, 4-isocyanatobutyl (meta)acrylate, (meta)acrylamide, ethylene di(meta)acrylate, diethylene glycol(meta)acrylate, triethyleneglycol di(meta)acrylate, trimethylenepropane tri(meta)acrylate, trimethylenepropanetriacrylate, 1,3-butandiol (meta)acrylate, 1,6-hexanediol di(meta)acrylate, allyl acrylate, and N-vinylcaprolactam; a hydrolysate of the polymerization product; or combination thereof.

3. The anode as claimed in claim 1, wherein the protective layer further comprises a second polymer having a functional group crosslinkable with the first polymer including a hydroxy group, and
   the protective layer further comprises a cross-linked polymer of the first polymer and the second polymer.

4. The anode as claimed in claim 3, wherein the second polymer comprises at least one of fluorinated polyamic acid including a carboxyl group and fluorinated polyimide including a carboxyl group.

5. The anode as claimed in claim 1, wherein an amount of i) the boric acid ($H_3BO_3$), ii) the hydrate of boron oxide ($B_2O_3$) and water, or a combination thereof in the protective layer is 5 wt% or less based on 100 wt% of the total weight of the protective layer.

6. The anode as claimed in claim 4, wherein the fluorinated polyamic acid is a polymer represented by Formula 1 or 2, and

   the fluorinated polyimide is a polymer represented by Formula 3 or 4:

Formula 1

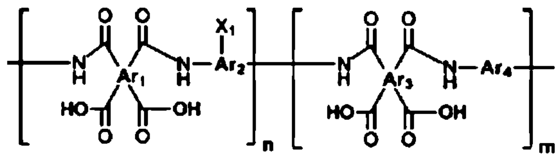

Formula 2

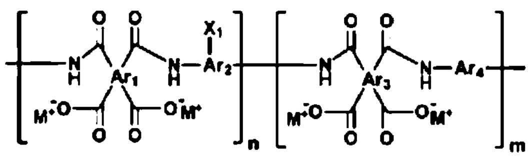

Formula 3

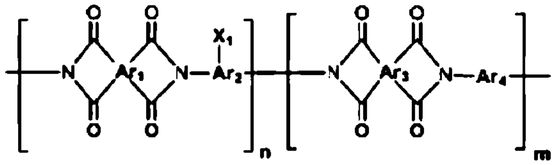

Formula 4

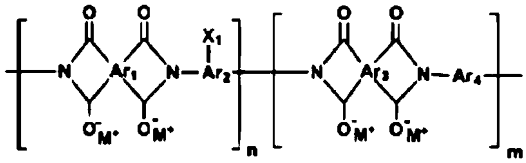

wherein, in the formulae above, M is alkali metal,

$Ar_1$ and $Ar_3$ are each independently an aromatic cyclic group selected from substituted or unsubstituted tetravalent C6-C24 arylene groups and substituted or unsubstituted tetravalent C4-C24 heteroarylene groups, wherein the aromatic cyclic group comprises one aromatic ring, a fused ring of two or more aromatic rings, or two or more aromatic rings linked together via a single bond, -O-, -S-, -C(=O)-, $-S(=O)_2-$, -Si(Ra)(Rb)-(wherein Ra and Rb are each independently a C1-C10 alkyl group), a substituted or unsubstituted C1-C10 alkylene group, or -C(=O)-NH-,

$Ar_2$ and $Ar_4$ are each independently an aromatic cyclic group selected from substituted or unsubstituted divalent C6-C24 arylene groups or substituted or unsubstituted divalent C4-C24 heteroarylene groups, wherein the aromatic cyclic group comprises one aromatic ring, a fused ring of two or more aromatic rings, or two or more aromatic rings linked together via a single bond, -O-, -S-, -C(=O)-, $-S(=O)_2-$, -Si(Ra)(Rb)- (wherein Ra and Rb are each independently a C1-C10 alkyl group), a substituted or unsubstituted C1-C10 alkylene group, or -C(=O)-NH-,

at least one of $Ar_1$ to $Ar_4$ are substituted with a halogen group,

$X_1$ comprises, as a first functional group, -COOH, -OH, $-CO-NH_2$, or -COH, and

n and m each indicate a mole fraction within a repeating unit and satisfy $0<n\leq1$, $0\leq m<1$, and $n+m=1$.

7. The anode as claimed in claim 6, wherein the fluorinated polyamic acid is a polymer represented by Formula 5 or 6, and

the fluorinated polyimide is a polymer represented by Formula 7 or 8:

Formula 5

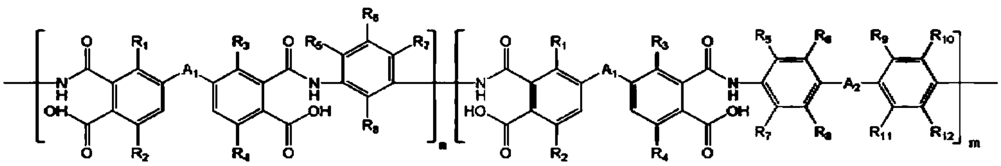

Formula 6

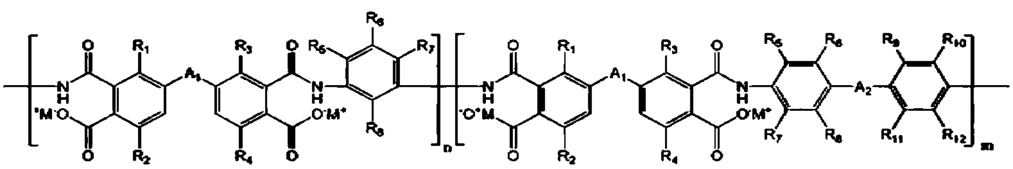

Formula 7

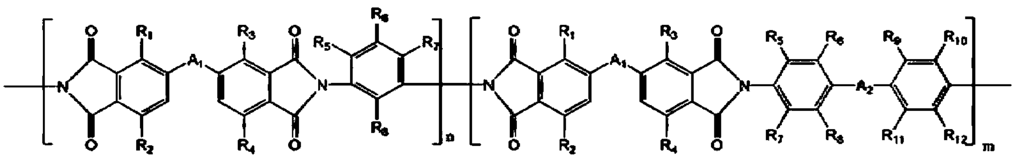

Formula 8

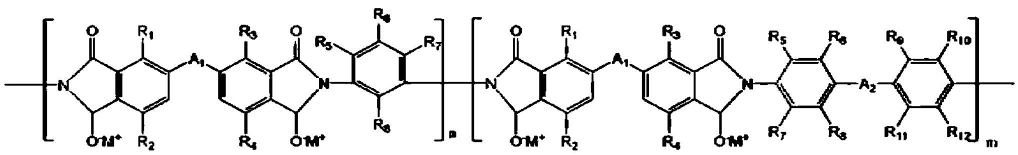

wherein, in the formulae above, M is lithium or sodium, $R_1$, $R_2$, $R_3$, $R_4$, $R_5$, $R_6$, $R_7$, $R_8$, $R_9$, $R_{10}$, $R_{11}$, and $R_{12}$ are each independently hydrogen, halogen, -COOH, -OH, -CO-$NH_2$, -COH, a C1-C10 alkyl group unsubstituted or substituted with a halogen, a C6-C20 aryl group unsubstituted or substituted with a halogen, or a C2-C20 heteroaryl group unsubstituted or substituted with a halogen, and at least one of $R_1$ to $R_{12}$ is each a halogen group or a group substituted with a halogen group,
$A_1$ and $A_2$ are each independently a single bond, -O-, -S-, -C(=O)-, - S(=O)$_2$-, -Si(Ra)(Rb)- (wherein Ra and Rb are each independently a C1-C10 alkyl group), a C1-C10 alkylene group unsubstituted or substituted with a halogen, or -C(=O)-NH-, at least one of $R_5$, $R_6$, $R_7$, and $R_8$ is -COOH, -OH, -CO-$NH_2$, or -COH, and n and m each indicate a mole fraction within a repeating unit and satisfy $0<n\leq1$, $0\leq m<1$, and $n+m=1$.

**8.** The anode as claimed in claim 4, wherein the fluorinated polyamic acid is a polymer represented by Formula 9 or 10, and

the fluorinated polyimide is a polymer represented by Formula 11 or 12:

Formula 9

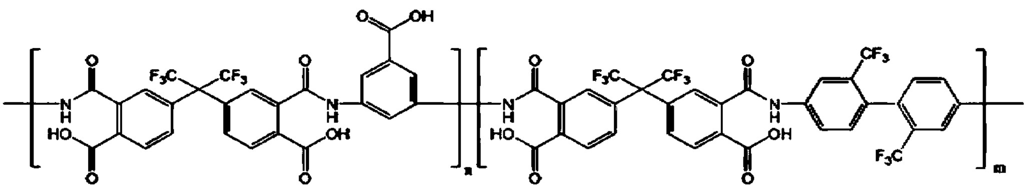

Formula 10

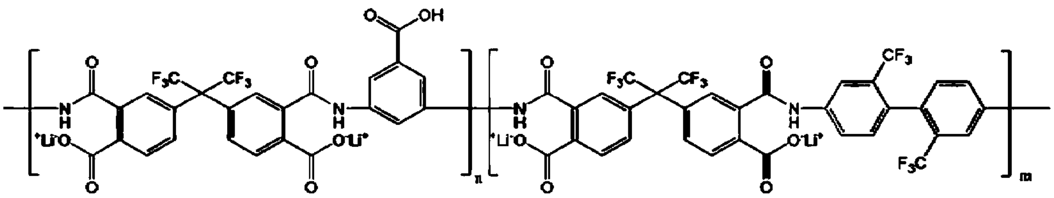

Formula 11

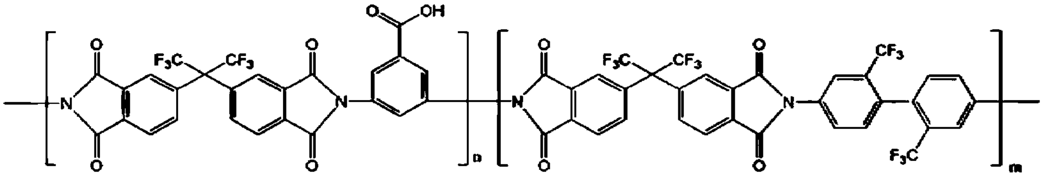

Formula 12

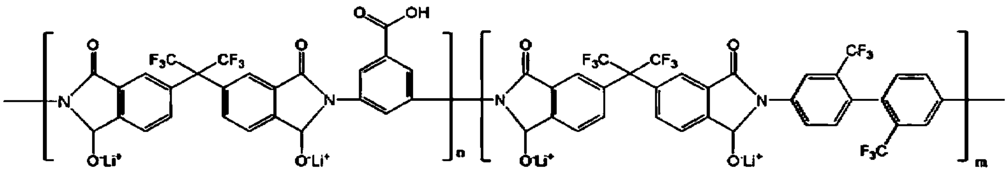

wherein, in the formulae above, n and m each indicate a mole fraction within a repeating unit and satisfy 0<n≤1, 0≤m<1, and n+m=1.

**9.** The anode as claimed in claim 3, wherein a weight ratio of the first polymer to the second polymer is in a range of about 50:50 to about 99:1.

**10.** The anode as claimed in claim 1, wherein the protective layer comprises a cross-linked polymer of polyvinyl alcohol and a first polymer represented by Formula 9 or 10:

Formula 9

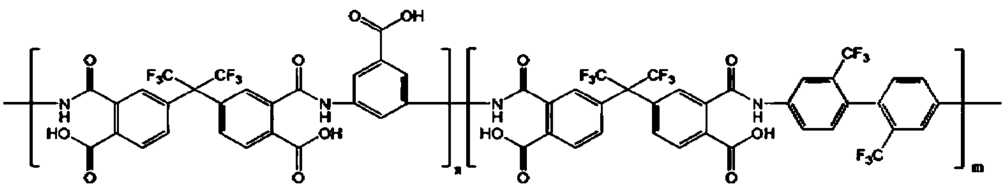

Formula 10

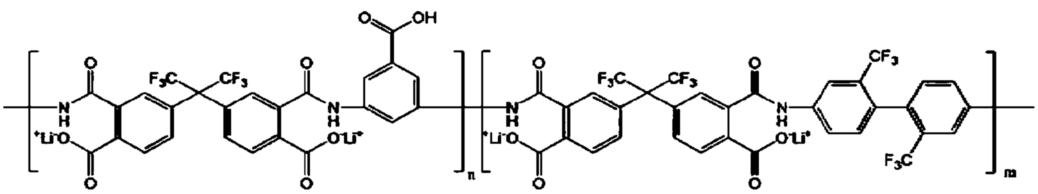

**11.** The anode as claimed in claim 1, wherein the protective layer further comprises a lithium salt, and a thickness of the protective layer is in a range of about 1 μm to about 10 μm.

**12.** The anode as claimed in claim 1, wherein the anode active material layer comprises lithium metal foil, lithium metal powder, lithium alloy foil, lithium alloy powder, or a combination thereof,

a lithium alloy includes lithium and a first metal, and

the first metal includes indium (In), silicon (Si), gallium (Ga), tin (Sn), aluminum (Al), Titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K), calcium (Ca), yttrium (Y), bismuth (Bi), tantalum (Ta), hafnium (Hf), barium (Ba), vanadium (V), strontium (St), lanthanum (La), or a combination thereof.

**13.** The anode as claimed in claim 1, wherein the anode active material layer includes: a carbon-based compound; a mixture of a carbon-based material and at least one of the first metal; a composite of a carbon-based material and at least one of the first metal; or a combination thereof,

the carbon-based material includes amorphous carbon,
the amorphous carbon has an average particle diameter in a range of about 10 nm to about 100 nm,
the carbon-based material includes carbon black, carbon nanotubes, carbon nanofibers, fullerene, activated carbon, carbon fibers, or a combination thereof, and
the first metal includes indium (In), silicon (Si), gallium (Ga), tin (Sn), aluminum (Al), Titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K), calcium (Ca), yttrium (Y), bismuth (Bi), tantalum (Ta), hafnium (Hf), barium (Ba), vanadium (V), strontium (St), lanthanum (La), or a combination thereof.

**14.** The anode as claimed in claim 1, wherein the anode has a structure in which the anode current collector, the anode active material layer, and the protective layer are sequentially arranged, and
the anode further comprises a lithium metal layer disposed on a surface of the protective layer, where the surface of the protective layer is a surface that is not adjacent to the negative electrode active material layer of the protective layer.

**15.** A lithium metal battery comprising:

a cathode;
an anode according to any one of claims 1 to 14; and
an electrolyte between the cathode and the anode.

**16.** The lithium metal battery as claimed in claim 15, wherein the electrolyte comprises a liquid electrolyte, a solid electrolyte, a gel electrolyte, or a combination thereof,

the solid electrolyte comprises an oxide-based solid electrolyte, a sulfide-based solid electrolyte, a polymer solid electrolyte, or a combination thereof, and
the gel electrolyte comprises a polymer gel electrolyte.

**17.** The lithium metal battery as claimed in claim 15, further comprising a separator.

**18.** The lithium metal battery as claimed in claim 15, wherein the cathode comprises a cathode current collector and a cathode active material layer, at least one of the cathode current collector and the anode current collector comprises a base film and a metal layer disposed on one side or both sides of the base film,

the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

**19.** A method of preparing a lithium metal battery, the method comprising: preparing an anode current collector;

preparing a composition for forming a protective layer, followed by forming a protective layer by applying and drying the composition onto the anode current collector, the composition including a first polymer including a hydroxy group, and i) boric acid ($H_3BO_3$), ii) a hydrate of boron oxide ($B_2O_3$) and water, or a combination thereof;
preparing an electrolyte;
preparing a cathode; and
preparing an assembly by stacking the anode current collector, the electrolyte, and the cathode to manufacture the lithium metal battery as claimed in claim 1.

**20.** The method as claimed in claim 19, wherein the composition further comprises a second polymer having a functional group crosslinkable with the first polymer including a hydroxy group.

FIG. 1A

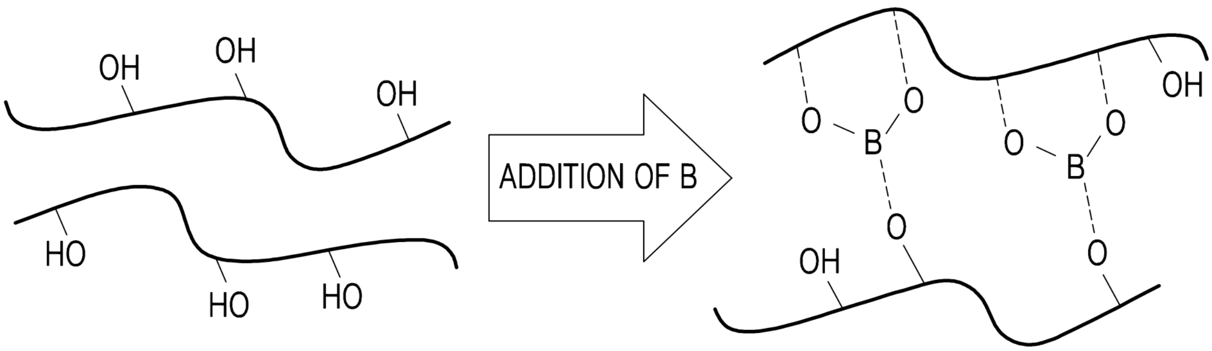


FIG. 1B

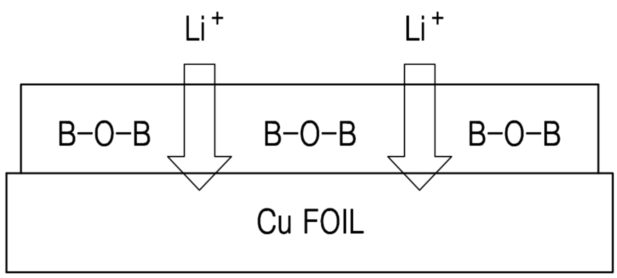

FIG. 2

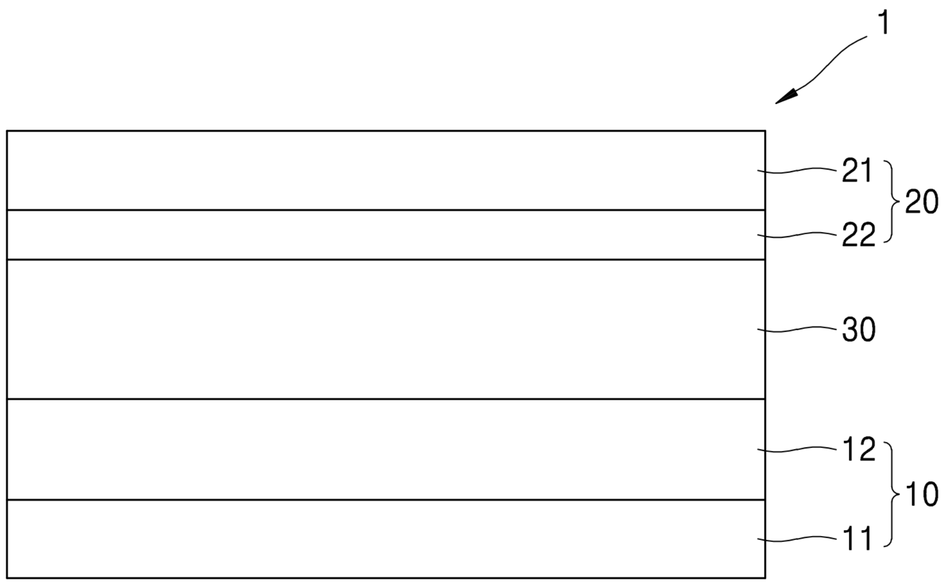

FIG. 3

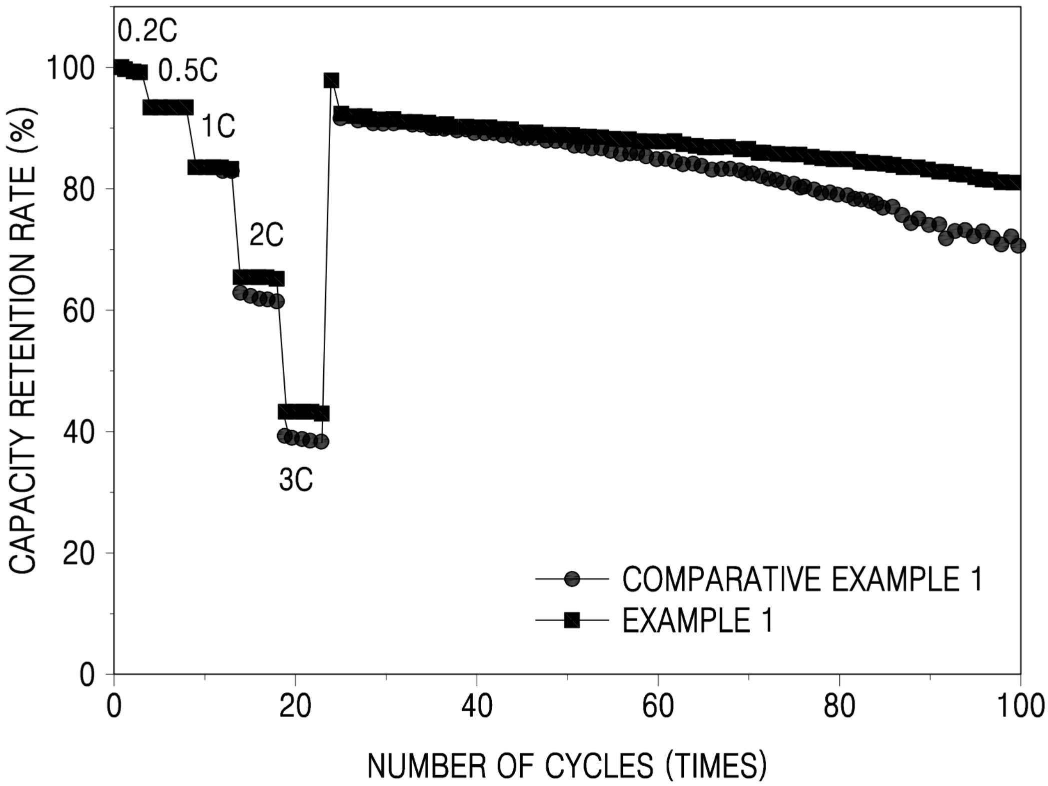
0.2C
0.5C
1C
2C
3C
100
80
60
40
20
0
CAPACITY RETENTION RATE (%)
0
20
40
60
80
100
NUMBER OF CYCLES (TIMES)
COMPARATIVE EXAMPLE 1
EXAMPLE 1

FIG. 4

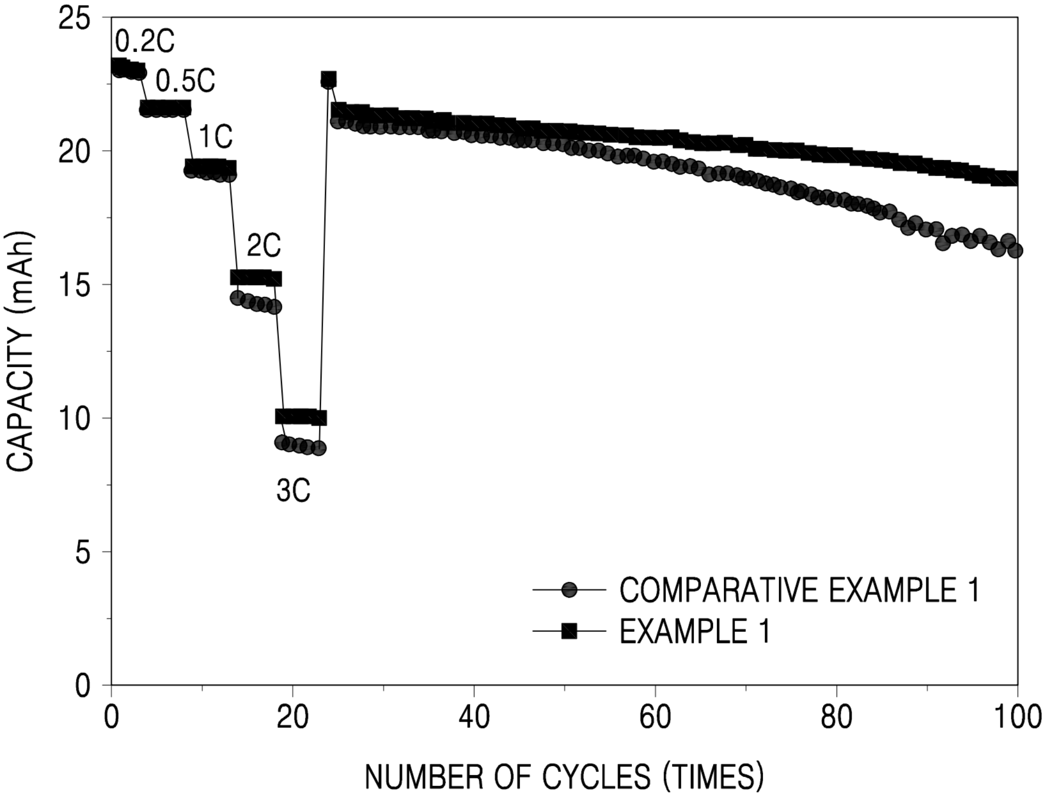

25
20
15
10
5
0
CAPACITY (mAh)
0.2C
0.5C
1C
2C
3C
0
20
40
60
80
100
NUMBER OF CYCLES (TIMES)
COMPARATIVE EXAMPLE 1
EXAMPLE 1

FIG. 5

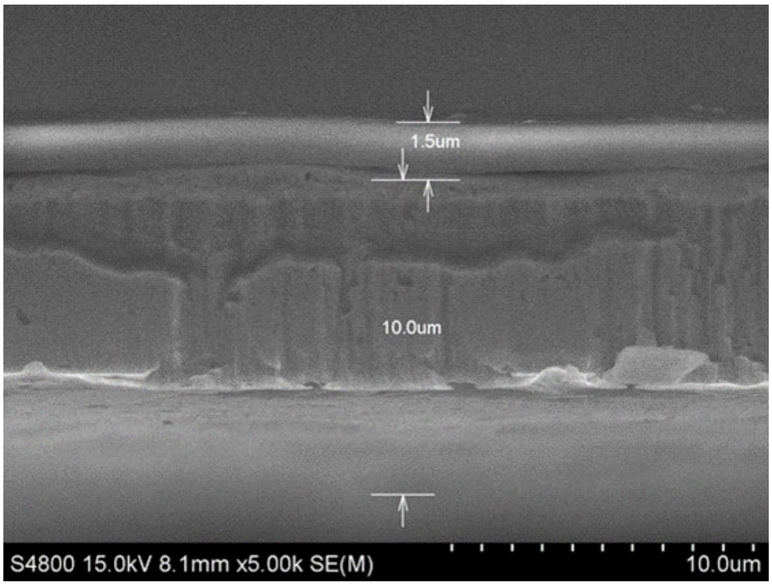

FIG. 6A

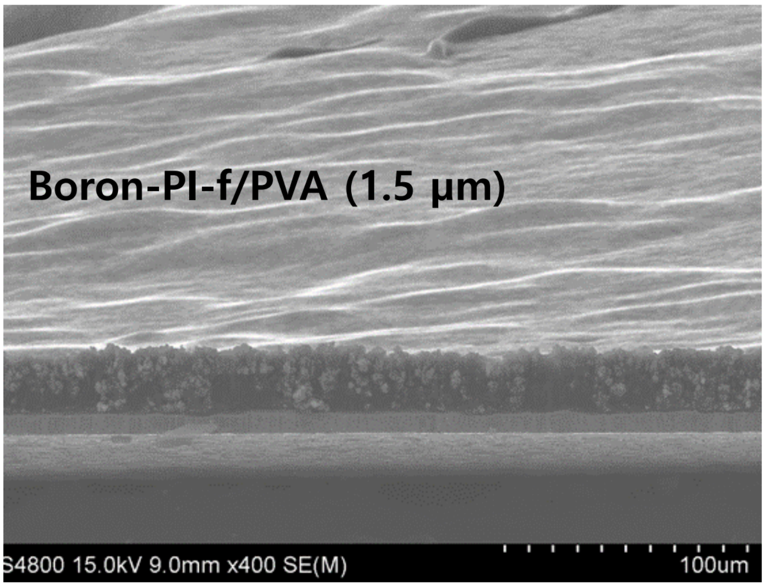

FIG. 6B

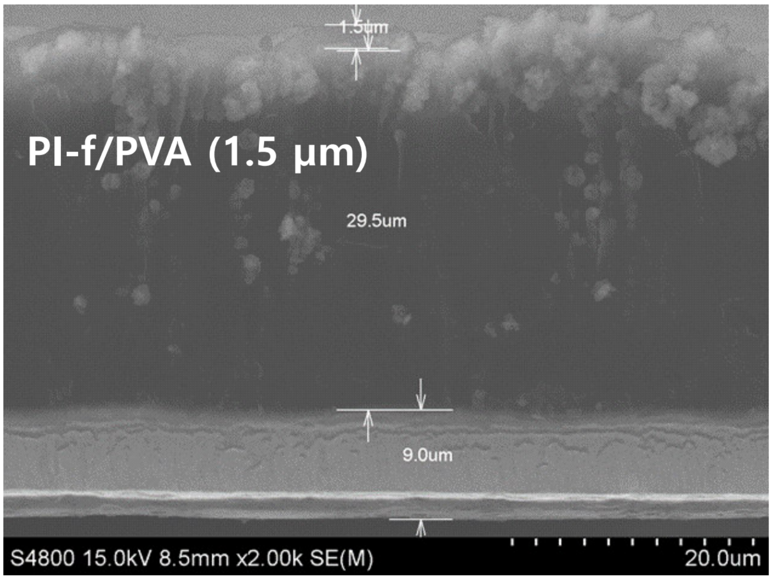
1.5um
PI-f/PVA (1.5 µm)
29.5um
9.0um
S4800 15.0kV 8.5mm x2.00k SE(M)
20.0um

FIG. 6C

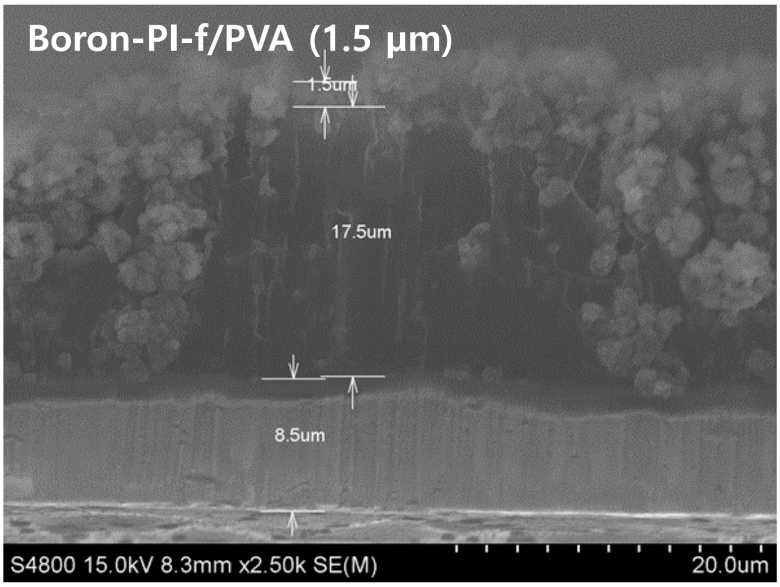
Boron-PI-f/PVA (1.5 μm)
1.5um
17.5um
8.5um
S4800 15.0kV 8.3mm x2.50k SE(M)
20.0um

FIG. 7

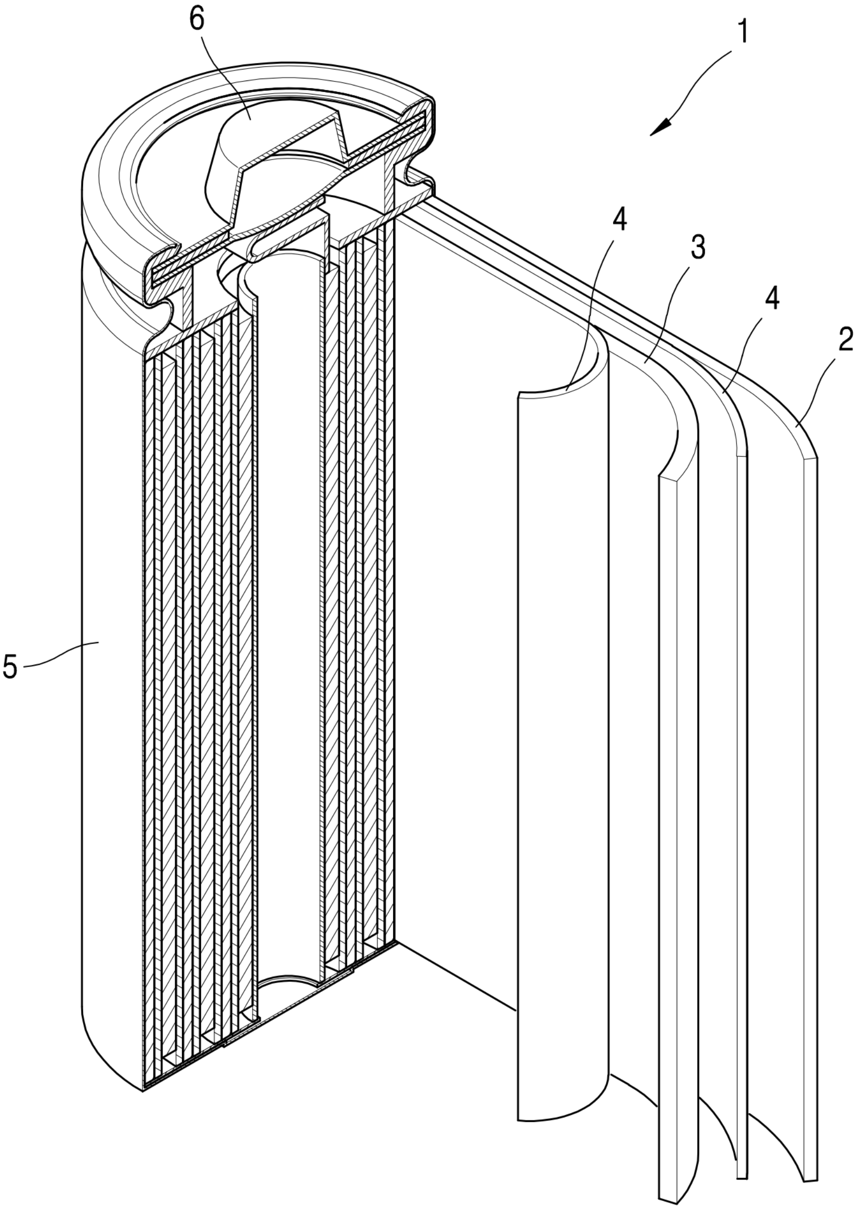

FIG. 8

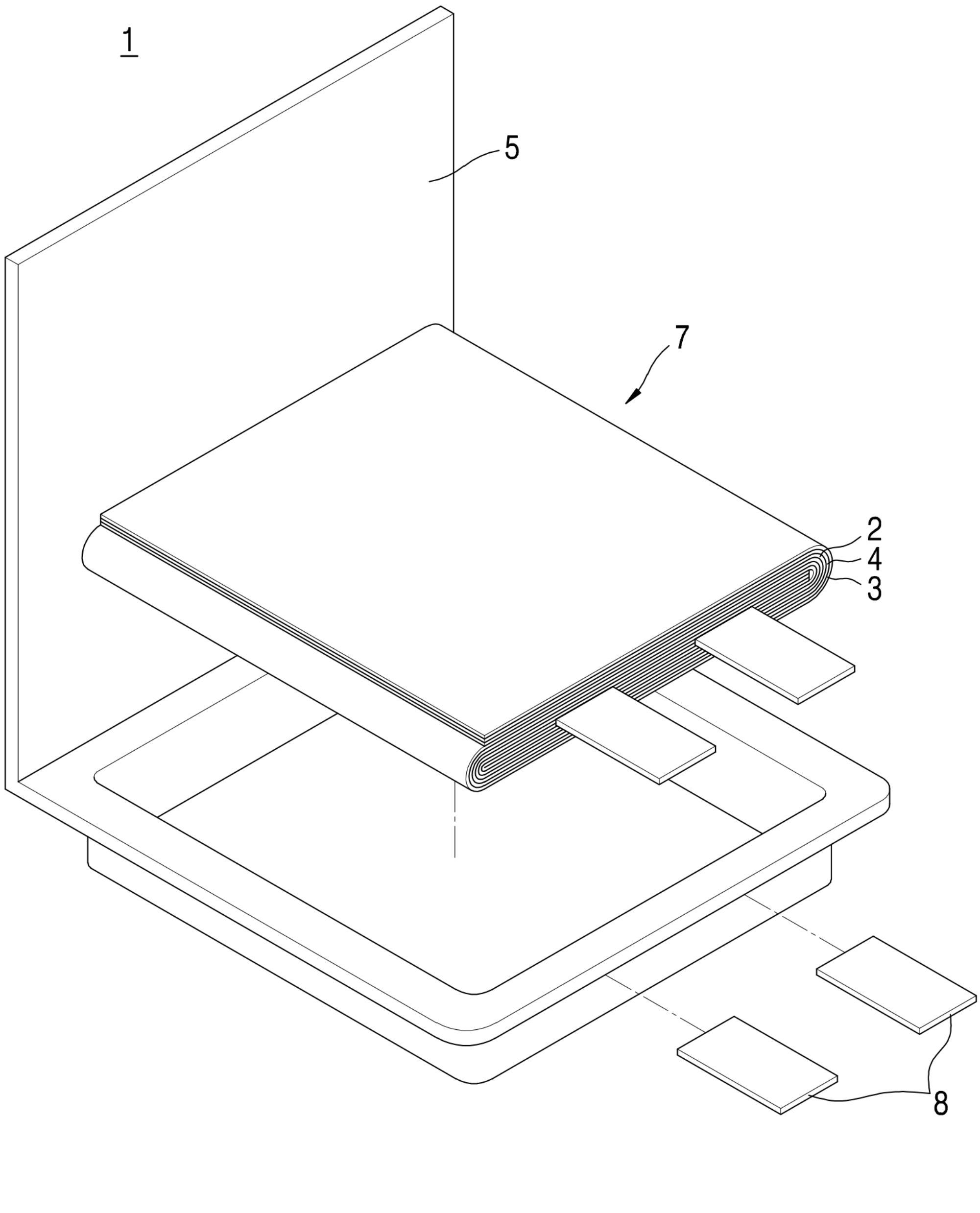

FIG. 9

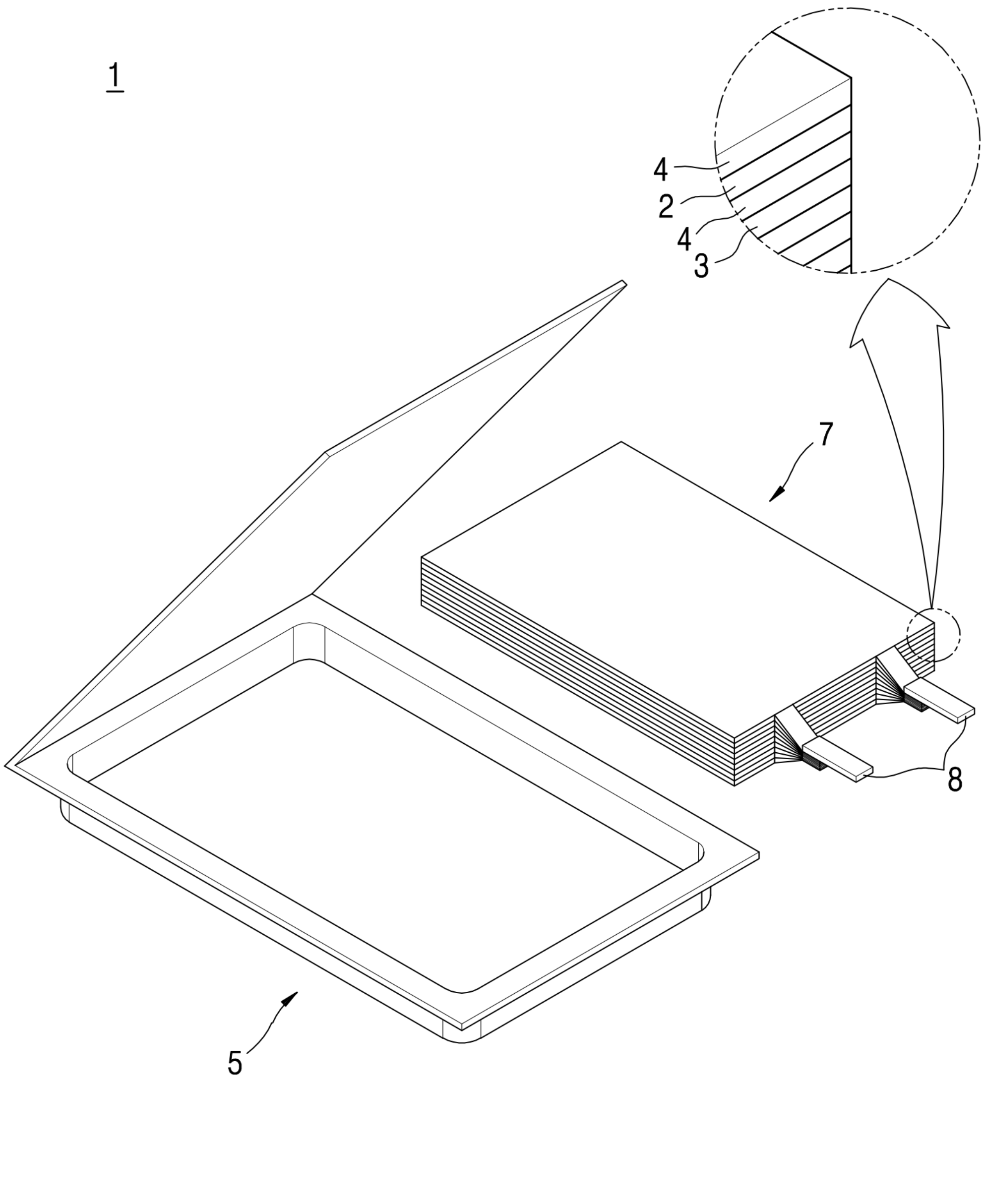

## INTERNATIONAL SEARCH REPORT

International application No.
**PCT/KR2024/003362**

### A. CLASSIFICATION OF SUBJECT MATTER

**H01M 4/66**(2006.01)i; **H01M 4/62**(2006.01)i; **H01M 4/38**(2006.01)i; **H01M 4/587**(2010.01)i; **H01M 10/0562**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/66(2006.01); H01M 10/052(2010.01); H01M 10/0525(2010.01); H01M 10/651(2014.01); H01M 10/654(2014.01); H01M 4/134(2010.01); H01M 4/137(2010.01); H01M 4/485(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 리튬금속전지(lithium metal battery), 음극(anode), 집전체(collector), 보호층(protecting layer), 수산기(hydroxy group, OH), 붕소(boron)

### C. DOCUMENTS CONSIDERED TO BE RELEVANT

| Category* | Citation of document, with indication, where appropriate, of the relevant passages | Relevant to claim No. |
|---|---|---|
| X | KR 10-2017-0001069 A (SAMSUNG ELECTRONICS CO., LTD.) 04 January 2017 (2017-01-04) See claims 1, 14-16, 24, 26, 30 and 32; and paragraphs [0019], [0020], [0041], [0118]-[0120], [0193]-[0197] and [0203]-[0206]. | 1,2,5,11,12,14-17,19 |
| Y | | 3,4,6-10,13,18,20 |
| Y | KR 10-2019-0035387 A (SAMSUNG ELECTRONICS CO., LTD. et al.) 03 April 2019 (2019-04-03) See claims 1 and 4-16; and paragraphs [0137] and [0138]. | 3,4,6-10,13,20 |
| Y | KR 10-2021-0003227 A (CONTEMPORARY AMPEREX TECHNOLOGY CO., LIMITED) 11 January 2021 (2021-01-11) See claims 1, 5 and 7; and paragraph [0032]. | 18 |
| A | US 2019-0148734 A1 (NATIONAL INSTITUTE OF ADVANCED INDUSTRIAL SCIENCE AND TECHNOLOGY et al.) 16 May 2019 (2019-05-16) See claims 1-13. | 1-20 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **21 June 2024** | **24 June 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
**PCT/KR2024/003362**

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0013630 A (LG CHEM, LTD.) 11 February 2019 (2019-02-11)<br>See claims 1-12. | 1-20 |

Form PCT/ISA/210 (second sheet) (July 2022)

**INTERNATIONAL SEARCH REPORT**
**Information on patent family members**

International application No.
**PCT/KR2024/003362**

| Patent document cited in search report | Publication date (day/month/year) | Patent family member(s) | Publication date (day/month/year) |
|---|---|---|---|
| KR 10-2017-0001069 A | 04 January 2017 | CN 106299244 A | 04 January 2017 |
| | | CN 106299244 B | 04 January 2022 |
| | | EP 3109924 A1 | 28 December 2016 |
| | | EP 3109924 B1 | 03 October 2018 |
| | | KR 10-2475886 B1 | 08 December 2022 |
| | | US 2016-0380314 A1 | 29 December 2016 |
| KR 10-2019-0035387 A | 03 April 2019 | CN 109560262 A | 02 April 2019 |
| | | CN 109560262 B | 23 May 2023 |
| | | KR 10-2473534 B1 | 05 December 2022 |
| | | US 10964937 B2 | 30 March 2021 |
| | | US 2019-0097220 A1 | 28 March 2019 |
| KR 10-2021-0003227 A | 11 January 2021 | CN 111180737 A | 19 May 2020 |
| | | CN 111180737 B | 03 August 2021 |
| | | EP 3796438 A1 | 24 March 2021 |
| | | EP 3796438 B1 | 29 March 2023 |
| | | EP 4187650 A1 | 31 May 2023 |
| | | HU E061850 T2 | 28 August 2023 |
| | | JP 2020-198290 A | 10 December 2020 |
| | | JP 7271390 B2 | 11 May 2023 |
| | | KR 10-2023-0165371 A | 05 December 2023 |
| | | PT 3796438 T | 13 April 2023 |
| | | US 11611081 B2 | 21 March 2023 |
| | | US 2021-0151770 A1 | 20 May 2021 |
| | | WO 2020-238225 A1 | 03 December 2020 |
| US 2019-0148734 A1 | 16 May 2019 | CN 109768229 A | 17 May 2019 |
| | | CN 109768229 B | 15 March 2024 |
| | | EP 3483952 A1 | 15 May 2019 |
| | | EP 3483952 B1 | 15 September 2021 |
| | | JP 2019-091539 A | 13 June 2019 |
| | | JP 7004969 B2 | 21 January 2022 |
| | | US 11552298 B2 | 10 January 2023 |
| KR 10-2019-0013630 A | 11 February 2019 | CN 109923704 A | 21 June 2019 |
| | | KR 10-2230751 B1 | 22 March 2021 |
| | | US 11205779 B2 | 21 December 2021 |
| | | US 2020-0058942 A1 | 20 February 2020 |
| | | WO 2019-027210 A2 | 07 February 2019 |
| | | WO 2019-027210 A3 | 11 April 2019 |

Form PCT/ISA/210 (patent family annex) (July 2022)